# EUROPÄISCHE PATENTANMELDUNG

(11) **EP 3 467 600 A1**
(43) Veröffentlichungstag der Anmeldung: **10.04.2019**
(21) Anmeldenummer: 17194759.1
(22) Anmeldetag: 04.10.2017
(51) Int. Cl.: G05B 19/05

(54) **CLOUD ZENTRALMODUL FÜR EINE SPEICHERPROGRAMMIERBARE STEUERUNG**

(71) Anmelder: Siemens Aktiengesellschaft, 80333 München (DE)
(72) Erfinder: Ermler, Rene, 91058 Erlangen (DE); Neidig, Jörg, 90419 Nürnberg (DE)

(57) **Zusammenfassung**

Die vorliegende Erfindung betrifft ein Cloud-Zentralmodul (200) für eine speicherprogrammierbare Steuerung (100)
- mit einer Rückwandbus-Schnittstelle (230) zur Verbindung des Cloud-Zentralmoduls (200) mit einem Rückwandbus (400) der speicherprogrammierbaren Steuerung (100) zur Kommunikation mit mindestens einem Ein-Ausgabe-Modul (310, 320) für die speicherprogrammierbare Steuerung (100),
- und mit einer Netzwerk-Schnittstelle (220) zur Verbindung mit einem Datennetzwerk (500),
- wobei im Datennetzwerk eine Cloud-SPS (510) implementiert ist, und die Cloud-SPS (510) zum Ablauf eines Steuerungsprogramms zur Steuerung einer mit dem mindestens einen Ein-Ausgabe-Modul (310, 320) verbundenen Vorrichtung oder Anlage (800) ausgebildet und eingerichtet ist,
wobei das Cloud-Zentralmodul (200)
- zum Empfang von Ausgabedaten von der Cloud-SPS (510) und der Weiterleitung der Ausgabedaten an das mindestens eine Ein-Ausgabe-Modul (310, 320) über den Rückwandbus (400) und/oder zur Weiterleitung von über den Rückwandbus (400) empfangenen Eingangsdaten vom mindestens einen Ein-Ausgabe-Modul (310, 320) an die Cloud-SPS (510),
- zur Anzeige von Identitäts- und/oder Zustandsinformationen der Cloud-SPS (510) vermittels einer Anzeigeeinrichtung (250) des Cloud-Zentralmoduls (200), und
- zur Veränderung eines Betriebszustands der Cloud-SPS (510) vermittels mindestens eines Bedienelements (260) des Cloud-Zentralmoduls (510)
ausgebildet und eingerichtet ist.

## Beschreibung

Die vorliegende Erfindung betrifft ein Cloud-Zentralmodul für eine speicherprogrammierbare Steuerung, wobei das Cloud-Zentralmodul eine Rückwandbusschnittstelle zur Verbindung des Cloud-Zentralmoduls mit einem Rückwandbus der speicherprogrammierbaren Steuerung zur Kommunikation mit mindestens einem Ein-Ausgabe-Modul für die modulare speicherprogrammierbare Steuerung, sowie eine Netzwerk-Schnittstelle zur Verbindung mit einem Datennetzwerk umfasst, wobei im Datennetzwerk eine Cloud-SPS implementiert ist, und die Cloud-SPS zum Ablauf eines Steuerungsprogramms zur Steuerung einer mit dem mindestens einen Ein-Ausgabe-Modul verbundenen Vorrichtung oder Anlage ausgebildet und eingerichtet ist.

Derartige Cloud-Zentralmodule sind aus dem Stand der Technik bekannt. So offenbart beispielsweise die Europäische Patentanmeldung EP 3 070 548 A2 ein sogenanntes "Cloud-Gateway", über welches industrielle Geräte, Komponenten oder Prozesse über ein Netzwerk an eine in einer sogenannten Cloud eingerichtete Steuerungseinrichtung verbunden werden kann.

Auch die Veröffentlichung "Control-as-a-Service from the Cloud: A case study for using virtualized PLCs, O. Givehchi et al., 2014 10th IEEE Workshop on Factory Communication Systems (WFCS 2014), Toulouse, 2014, Seiten 1-4" offenbart eine solche innerhalb einer Cloud implementierten Steuerungseinrichtung welche über ein entsprechendes Gateway mit Eingabe-/Ausgabe-Einheiten verbunden ist.

Es ist ein Nachteil des genannten Stand der Technik, dass die dort offenbarten Automatisierungssysteme unter Verwendung einer in einer Cloud implementierten Steuereinrichtung prinzipiell anders ausgestaltet und zu parametrieren sind, als dies heute für ein Automatisierungssystem der Fall ist, welches mit einer herkömmlichen Steuereinrichtung, beispielsweise einer gängigen speicherprogrammierbaren Steuerung, betrieben wird.

Daher ist es eine Aufgabe der vorliegenden Erfindung, eine Vorrichtung und/oder ein Verfahren zur Verfügung zu stellen, welche eine einfachere Anpassung bestehender Automatisierungssysteme an cloud-basierte Automatisierungs-Mechanismen ermöglicht.

Diese Aufgabe wird gelöst von einem Cloud-Zentralmodul mit den Merkmalen des vorliegenden Patentanspruch 1.

Ein derartiges Cloud-Zentralmodul ist für die Verwendung innerhalb einer speicherprogrammierbaren Steuerung ausgebildet und eingerichtet und umfasst eine Rückwandbus-Schnittstelle zur Verbindung des Cloud-Zentralmoduls mit einem Rückwandbus der speicherprogrammierbaren Steuerung zur Kommunikation mit mindestens einem Ein-Ausgabe-Modul für die modulare speicherprogrammierbaren Steuerung. Weiterhin umfasst das Cloud-Zentralmodul eine Netzwerk-Schnittstelle zur Verbindung mit einem Datennetzwerk, wobei im Datennetzwerk eine Cloud-SPS implementiert ist, und die Cloud-SPS zum Ablauf eines Steuerungsprogramms zur Steuerung einer mit dem mindestens einen Ein-Ausgabe-Modul verbundenen Vorrichtung oder Anlage ausgebildet und eingerichtet ist. Dabei ist das Cloud-Zentralmodul zum Empfang von Ausgabedaten von der Cloud-SPS und der Weiterleitung dieser Ausgabedaten an das mindestens eine Ein-Ausgabe-Modul über den Rückwandbus und/oder zur Weiterleitung von über den Rückwandbus empfangenden Eingangsdaten vom mindestens einen Ein-Ausgabe-Modul an die Cloud-SPS eingerichtet und ausgebildet. Zudem ist das Cloud-Zentralmodul zur Anzeige von Identitäts- und/oder Zustandsinformationen der Cloud-SPS vermittels einer Anzeigeeinrichtung des Cloud-Zentralmoduls und zur Veränderung eines Betriebszustands der Cloud-SPS vermittels mindestens eines Bedienelements des Cloud-Zentralmoduls ausgebildet und eingerichtet.

Durch die Möglichkeit, das Cloud-Zentralmodul auf der einen Seite mit einer cloud-basierten Steuerungseinrichtung, der genannten Cloud-SPS, verbinden zu können, und auf der anderen Seite über den Rückwandbus der speicherprogrammierbaren Steuerung das Cloud-Zentralmodul an deren Ein-Ausgabe-Module anschließen zu können, ergibt sich die Möglichkeit, über das Cloud-Zentralmodul eine Cloud-basierte Steuerungseinrichtung mit der Hardware, wie sie innerhalb herkömmlicher speicherprogrammierbarer Steuerungen verwendet wird, zu verknüpfen.

So ermöglicht es die vorliegende Erfindung beispielsweise, zumindest teilweise herkömmliche Hardware zur Anlagen- oder Maschinensteuerung mit einer Cloud-basierten Steuerungseinrichtung zu verwenden. Solche teilweise weiterverwendbaren Hardwarekomponenten können z.B. entsprechender Ein-Ausgabe-Module sowie ein Rückwandbus einer herkömmlichen speicherprogrammierbaren Steuerung sein. Dies vereinfacht die Anpassung eines bestehenden Automatisierungssystems an eine Cloud-basierte Steuerung, in dem zumindest Teile der Hardware des bestehenden Automatisierungssystems beibehalten werden können, und somit das Einrichten des neuen, Cloud-basierten Mechanismus, vereinfacht wird.

Parallel dazu vereinfacht auch die Anzeige der Identitäts- und/oder Zustandsinformationen der Cloud-SPS sowie die Möglichkeit der Veränderung des Betriebszustands der Cloud-SPS vermittels Bedienelementen des Cloud-Zentralmoduls die Umstellung eines herkömmlichen Automatisierungssystems auf ein Cloud-basiertes Steuerungssystem. Dies ermöglicht es einem Bediener den Zustand des Steuerungssystems, vergleichbar mit einem herkömmlichen Steuerungssystem, zu erkennen und/oder ändern.

Das Cloud-Zentralmodul kann weiterhin eine Modul-Ablaufumgebung zum Handling beziehungsweise der Zwischenspeichung von zwischen der Cloud-SPS und dem mindestens einen Ein-Ausgabe-Modul ausgetauschten Daten aufweisen.

Außerdem kann das Cloud-Zentralmodul beispielsweise auch Lizenz- und/oder Initialisierungs-Informationen für die Cloud-SPS umfassen, die beispielsweise in einer Speichereinrichtung des Cloud-Zentralmoduls gespeichert sein können.

Das Cloud-Zentralmodul kann auch Ein-Ausgabe Komponenten zur Verbindung mit einer zur steuernden Vorrichtung oder Anlage umfassen. Solche Ein-Ausgabe-Komponenten können beispielsweise zur unmittelbaren Verbindung mit einer Vorrichtung oder Anlage ausgebildet und eingerichtet sein, oder auch zur Verbindung mit einer sogenannten "Dezentralen Peripherie", wobei die eigentlich zu steuernde Vorrichtung oder Anlage dann mit den Komponenten der genannten dezentralen Peripherie verbunden ist. In einer weiteren vorteilhaften Ausgestaltung umfasst das Cloud-Zentralmodul keine Ein-Ausgabe-Komponenten zur unmittelbaren Verbindung mit einer zu steuernden Vorrichtung oder Anlage.

Die speicherprogrammierbare Steuerung kann als eine modulare speicherprogrammierbare Steuerung ausgebildet und eingerichtet sein, die aus mehreren, teilweise unterschiedlichen Modulen aufbaubar oder aufgebaut ist. Typischerweise sind hierfür mindestens ein Stromversorgungsmodul, mindestens ein Zentralmodul sowie meist mehrere Eingabe-Ausgabe-Module sowie weitere Funktionsmodule einsetzbar. Alternativ kann die speicherprogrammierbare Steuerung auch als eine integrierte Steuerung ausgebildet sein, bei welcher zumindest ein zentraler Steuerungsteil sowie zumindest einige Ein-Ausgabe-Komponenten im integrierten System vorgesehen sind. Ein solches integriertes System kann auch, beispielsweise über einen Rückwandbus, erweiterbar mit weiteren beispielsweise Ein-Ausgabe-Modulen, Funktionsmodulen und/oder Kommunikationsmodulen sein. Der Rückwandbus in einem solchen integrierten System kann beispielsweise teilweise innerhalb des integrierten Systems verlaufen, aber auch zum Beispiel zur Verbindung mit den genannten Erweiterungsmodulen für das integrierten System vorgesehen, eingerichtet und ausgebildet sein.

Der Rückwandbus ist zur Verbindung des Cloud-Zentralmoduls mit dem mindestens einen Ein-Ausgabe-Modul der speicherprogrammierbaren Steuerung vorgesehen, eingerichtet und ausgebildet. Der Rückwandbus kann zumindest teilweise innerhalb der jeweiligen Module verlaufen und beispielsweise auch mit Steckverbindern oder Kontaktverbindern der jeweiligen Module verbunden sein. Der Rückwandbus kann auch eine gesonderte elektrische und/oder mechanische Einheit umfassen, mit welcher die einzelnen Module dann verbindbar oder verbunden sind. Der Rückwandbus kann auch durch Verbindung von Rückwandbus-Verbindungselementen der einzelnen Module aufgebaut werden (z.B. eine sogenannte "Daisy Chain").

Die Rückwandbus-Schnittstelle umfasst beispielsweise einen sogenannten Kommunikations-Stack für die Kommunikation des Cloud-Zentralmoduls mit dem Rückwandbus. Die Verbindung des Cloud-Zentralmoduls mit dem Rückwandbus ist zumindest als kommunikative Verbindung ausgebildet und eingerichtet. Zudem kann aber auch eine mechanische Verbindung des Cloud-Zentralmoduls beispielsweise mit einem Rückwandbus-Modul oder einem entsprechenden Trägerelement vorgesehen sein. Die Verbindung des Cloud-Zentralmoduls mit dem Rückwandbus kann beispielsweise als eine lösbare Verbindung ausgebildet und eingerichtet sein oder auch als eine fixe Verbindung ausgebildet und eingerichtet sein.

Die Kommunikation des Cloud-Zentralmoduls mit dem mindestens einen Ein-Ausgabe-Modul kann beispielsweise unmittelbar und ausschließlich über den Rückwandbus erfolgen oder auch nur teilweise über den Rückwandbus und zusätzlich über eine weitere Datenleitung. In letzterem Fall kann beispielsweise ein Kommunikationsmodul für die speicherprogrammierbare Steuerung mit dem Rückwandbus verbunden sein und das Ein-Ausgabe-Modul dann weiterhin mit dem Kommunikations-Modul verbunden sein - beispielsweise im Rahmen einer sogenannten "Dezentralen Peripherie".

Unter einem Ein-Ausgabe-Modul wird ein Modul für die speicherprogrammierbare Steuerung verstanden, welches als Ein- und/oder Ausgabe-Modul zur Eingabe von Signalen und/oder Daten von einer gesteuerten Vorrichtung oder Anlage und/oder zur Ausgabe von Signalen und/oder Daten an die gesteuerte Vorrichtung oder Anlage ausgebildet und eingerichtet ist. Neben dem mindestens einen Ein-Ausgabe-Modul kann die speicherprogrammierbare Steuerung weitere Module, wie beispielsweise ein Kommunikationsmodul, ein Stromversorgungsmodul, ein Funktionsmodul, ein Antriebsmodul und/oder ähnliche, vergleichbare weitere Module umfassen. Dabei können die genannten Module ebenfalls über den Rückwandbus untereinander, mit dem mindestens einen Ein-Ausgabe-Modul sowie mit dem Cloud-Zentralmodul verbunden sein.

Das Datennetzwerk kann als ein Netzwerk mehrerer Rechnereinheiten und/oder Server ausgebildet und eingerichtet sein. Vorteilhafterweise kann das Datennetzwerk als sogenannte "Cloud" ausgebildet und eingerichtet sein, wobei das Datennetzwerk in diesem Fall einen IT-Infrastruktur zur Verfügung stellt und aufweist, welche beispielsweise Speicherplatz, Rechenleistung und/oder Anwendungssoftware als Dienstleistung über das Internet bereitstellt. In diesem Fall ist das Cloud-Zentralmodul zur Kommunikation mit der Cloud-IT-Infrastruktur über die Netzwerk-Schnittstelle ausgebildet und eingerichtet.

Unter der Cloud-SPS wird ein im Datennetzwerk implementierter Software-Dienst verstanden, welcher zumindest teilweise die Funktionalität einer Steuerungseinrichtung, insbesondere einer speicherprogrammierbaren Steuerung, aufweist oder umfasst. Insbesondere kann die Cloud-SPS beispielsweise als Software-Instanz oder ein Software-Dienst ausgestaltet und eingerichtet sein, welcher die Funktionalität einer speicherprogrammierbaren Steuerung, insbesondere eines Zentralmoduls einer speicherprogrammierbaren Steuerung, aufweist bzw. umfasst (im Folgenden beispielsweise als SPS-Instanz oder SPS-Dienst bezeichnet). Insbesondere kann die Cloud-SPS beispielsweise gemäß einem "Cloud-based Industrial Controller" gemäß der vorstehend bereits genannten Europäischen Anmeldung EP 3 070 548 A2 ausgebildet und eingerichtet sein. Weiterhin kann die Cloud-SPS auch gemäß einem "PLC-as-a-Service" oder einer "Virtual PLC" gemäß dem vorstehend ebenfalls genannten Artikel "Control-as-a-service from the Cloud: A case study for using virtualized PLCs, von O. Givehchi et al." ausgebildet und eingerichtet sein.

Dabei kann die Implementierung einer Cloud-SPS im Datennetzwerk beispielsweise bedeuten, dass die entsprechende Anwendung im Rahmen eines "Software-as-a-Service" zur Verfügung gestellt wird. Beispielsweise kann die Cloud-SPS auch als Instanz einer Software im Datennetzwerk implementiert werden. Die Cloud-SPS kann auch als Software im Datennetzwerk fest vorinstalliert sein.

Der Ablauf des Steuerungsprogramms in der Cloud-SPS kann beispielsweise zyklisch erfolgen. Dabei kann beispielsweise nach dem Ablauf eines Zyklus des Steuerungsprogramms das Steuerungsprogramm im Rahmen eines nächsten Zyklus erneut ablaufen. Zwischen zwei Steuerungsprogramm-Zyklen kann weiterhin vorgesehen sein, dass Ausgangsdaten des Steuerungsprogramms über das Cloud-Zentralmodul an das mindestens eine Ein-Ausgabe-Modul gesendet werden und Eingangsdaten vom mindestens einen Ein-Ausgabe-Modul über das Cloud-Zentralmodul zur Cloud-SPS übertragen werden. Insbesondere kann vorgesehen sein, dass vor dem Ablauf eines Zyklus des Steuerungsprogramms die Eingangsdaten vom mindestens einen Ein-Ausgabe-Modul zur Cloud-SPS und nach dem Ablauf eines Steuerungsprogramm-Zyklus Ausgangsdaten von der Cloud-SPS zum mindestens einen Ein-Ausgabe-Modul übertragen werden.

Weiterhin kann im Rahmen der Cloud-SPS ein sogenanntes "Prozessabbild" vorgesehen sein, welches einen Speicherbereich darstellt, der zur Zwischenspeicherung der genannten Eingangs- und/oder Ausgangsdaten vorgesehen und eingerichtet ist. In diesem Prozessabbild können dann beispielsweise die vom Steuerungsprogramm erzeugten Ausgangsdaten und/oder die für das Steuerungsprogramm vorgesehenen Eingangsdaten zwischengespeichert und/oder vorgehalten werden.

Die von der Cloud-SPS im Rahmen des Ablaufs des Steuerungsprogramms über die speicherprogrammierbare Steuerung gesteuerte Vorrichtung kann beispielsweise einen Sensor, einen Aktor, ein Gerät oder auch eine Kombination von einem oder mehreren dieser Komponenten umfassen. Eine gesteuerte Anlage kann beispielsweise eine oder mehrere solcher Vorrichtungen, Sensoren, Aktoren, Geräte oder weitere Einrichtungen umfassen. Auch weitere Controller oder Steuerungsgeräte können Bestandteil einer Vorrichtung oder Anlage sein.

Identitätsinformationen bezüglich der Cloud-SPS können beispielsweise Informationen zu einem Typ, einem Modell und/oder einer Ausgestaltung einer Cloud-SPS sein, wie beispielsweise einer ID-Nummer, einer Bestellnummer oder Ähnliches, oder solche umfassen. Weiterhin können die Identitätsinformationen auch technische Kenndaten für die Cloud-SPS umfassen oder aus derartigen Kenndaten bestehen.

Zustandsinformationen der Cloud-SPS können beispielsweise Informationen über einen Betriebszustand der Cloud-SPS umfassen oder aus solchen bestehen. Derartige Betriebszustände können beispielsweise ein "Run"-, ein "Stopp"-, ein "Einricht"- oder eine vergleichbare Betriebsart sein. Dabei kann im Run-Betriebszustand die Steuerung einer Anlage beziehungsweise Vorrichtung vermittels des Ablaufs des Steuerungsprogramms in der Cloud-SPS vorgesehen sein, während im Stopp-Betriebszustand die Cloud-SPS funktional angehalten ist. Im Einricht-Betriebszustand oder Engineering-Betriebszustand kann das Einrichten beziehungsweise das Engineering der Cloud-SPS vorgesehen sein. In diesem Betriebszustand kann beispielsweise vorgesehen sein, dass eine entsprechende Engineering-Software sowohl Daten beziehungsweise Programme in die Cloud-SPS schreiben kann als auch den Ablauf eines Programms überwachen und auch Daten auslesen kann. Im Engineering-Betriebszustand der Cloud-SPS kann beispielsweise vorgesehen sein, dass beim Schreiben eines Programms in die Cloud-SPS diese im Stopp-Zustand ist. Weitere Betriebszustände können beispielsweise ein Reset-Betriebszustand, ein Maintenance-Betriebszustand und/oder ein Störungs-Betriebszustand der Cloud-SPS sein.

Bedienelemente können beispielsweise Schalter, Taster, berührungsempfindliche Sensoren und Sensorflächen, ein Touch-Display oder vergleichbare Bedienelemente sein. Dabei kann das Cloud-Zentralmodul mehrere, insbesondere auch unterschiedliche Bedienelemente umfassen. Dabei können die Bedienelemente sowie die Anzeigeeinrichtung derart ausgebildet und eingerichtet sein, dass die Bedienung des Cloud-Zentralmoduls für einen Benutzer der Bedienung eines vergleichbaren, herkömmlichen Zentralmoduls für die speicherprogrammierbare Steuerung entspricht. Dabei wird hier unter einem herkömmlichen Zentralmodul eines verstanden, das eigenständig zum Ablauf des Steuerungsprogramms ausgebildet und eingerichtet ist.

In einer vorteilhaften Ausgestaltung ist die speicherprogrammierbare Steuerung als eine modulare speicherprogrammierbare Steuerung ausgebildet und eingerichtet, wobei das Cloud-Zentralmodul als ein auswechselbares Modul für die modulare speicherprogrammierbare Steuerung ausgebildet und eingerichtet ist. Weiterhin können die genannte modulare speicherprogrammierbare Steuerung sowie das Cloud-Zentralmodul derart ausgebildet und eingerichtet sein, dass das Cloud-Zentralmodul mit dem Rückwandbus der modularen speicherprogrammierbaren Steuerung lösbar verbindbar ist.

Dies ermöglicht eine weitere Vereinfachung der Anpassung bestehender Automatisierungssysteme an cloud-basierte Automatisierungsmechanismen, da durch die Modularität der modularen speicherprogrammierbaren Steuerung die zumindest teilweise Weiterverwendung der Hardware des bestehen Automatisierungssystems vereinfacht wird.

Die modulare speicherprogrammierbare Steuerung kann aus mehreren Modulen, insbesondere baulich unabhängigen Modulen, aufgebaut sein. Wesentliche Module einer modularen speicherprogrammierbaren Steuerung sind beispielsweise ein zentrales Steuerungs-Modul oder CPU-Modul. Ein Stromversorgungs-Modul, ein oder mehrere Eingabe- und/oder Ausgabe-Module und gegebenenfalls noch ein oder mehrere Kommunikationsmodule, Funktionsmodule oder auch Antriebsmodule oder weitere vergleichbare Module. Der Aufbau einer modularen speicherprogrammierbaren Steuerung geschieht beispielsweise durch Auswahl geeigneter Module aus einer Vielzahl möglicher verwendbarer Module und Zusammenstellung der Module zur speicherprogrammierbaren Steuerung, wobei die einzelnen Module über den Rückwandbus verbunden beziehungsweise kommunikativ gekoppelt sind.

Dafür haben die einzelnen Module mindestens eine Rückwandbus-Schnittstelle. Dabei kann der Rückwandbus beispielsweise als eigene bauliche Einheit vorgesehen sein oder auch durch kommunikative Verbindung der einzelnen Module - beispielsweise über entsprechende Steckverbinder oder Kabel - aufgebaut. Der Rückwandbus kann auch einen entsprechenden Träger zur mechanischen Fixierung und/oder Halterung der Module der modularen speicherprogrammierbaren Steuerung umfassen.

Das Cloud-Modul kann mit dem Rückwandbus der speicherprogrammierbaren Steuerung derart lösbar verbindbar sein, dass ein entsprechendes Lösen der Verbindung baulich vorgesehen ist und im Rahmen einer normalen Nutzung der speicherprogrammierbaren Steuerung vorgesehen und vornehmbar ist. Dafür können beispielsweise entsprechende Steckverbinder oder Kontaktverbinder zur Herstellung der lösbaren Verbindung von Rückwandbus und Cloud-Zentralmodul vorgesehen sein. Weiterhin kann die lösbare Verbindung zwischen Cloud-Zentralmodul und Rückwandbus auch eine lösbare mechanische Verbindung beispielsweise über entsprechende Rasten oder Haken oder sonstige lösbare mechanische Arretierungen umfassen.

Das Cloud-Zentralmodul kann weiterhin zur Ausführung eines Einrichtbetriebs und eines Normalbetriebs ausgebildet und eingerichtet sein. Dabei ist der Einrichtbetrieb derart ausgebildet und eingerichtet, dass im Einrichtbetrieb des Cloud-Zentralmoduls vom Cloud-Zentralmodul eine Kommunikationsverbindung zur Cloud-SPS aufgebaut wird. Weiterhin kann auch eine Instanziierung oder Einrichtung der Cloud-SPS Teil des Einrichtbetriebs des Cloud-Zentralmoduls sein. Der Normalbetrieb des Cloud-Zentralmoduls ist zur Ankopplung der Cloud-SPS an den Rückwandbus der speicherprogrammierbaren Steuerung und/oder zur Kommunikation der Cloud-SPS mit dem mindestens einen Ein-Ausgabe-Modul der speicherprogrammierbaren Steuerung über den Rückwandbus ausgebildet und eingerichtet.

Der Aufbau der Kommunikationsverbindung zur Cloud-SPS kann beispielsweise durch eine entsprechende Benutzereingabe beispielsweise einer IP-Adresse, eines Ports, eines eindeutigen Namens beziehungsweise einer eindeutigen Identifikationskennung, eines Passworts und/oder weiterer vergleichbarer Informationen ausgelöst werden. Alternativ können die genannten Daten auch im Cloud-Zentralmodul zumindest teilweise hinterlegt sein und durch Nutzereingabe oder auch selbsttätig zum Aufbau der Kommunikationsverbindung zur Cloud-SPS an das Datennetzwerk gesendet werden. Die genannten Daten können beispielsweise in einer Speichereinrichtung des Cloud-Zentralmoduls und/oder auf einem wechselbaren Datenträger im Cloud-Zentralmodul gespeichert beziehungsweise vorgehalten werden.

Das Einrichten beziehungsweise Instanziieren der Cloud-SPS im Datennetzwerk kann beispielsweise ebenfalls durch Übertragen einer entsprechenden Kennung für die Cloud-SPS vom Cloud-Zentralmodul zum Datennetzwerk ausgelöst werden, und/oder auch durch Übertragen entsprechender technischer oder sonstiger Kenndaten für die Cloud-SPS. Diese Übertragung kann beispielsweise durch eine Nutzereingabe ausgelöst werden oder auch selbsttätig, beispielsweise bei einem Einschalten des Cloud-Zentralmoduls, beim Herstellen einer Stromversorgung zum Cloud-Zentralmodul und/oder auch beim Herstellen einer Datenverbindung vom Cloud-Zentralmodul zum Datennetzwerk. Nach der Erstellung beziehungsweise Instanziierung der entsprechenden Cloud-SPS im Datennetzwerk kann dann weiterhin die Kommunikationsverbindung des Cloud-Zentralmoduls zur Cloud-SPS aufgebaut werden, beispielsweise wiederum durch eine Nutzereingabe ausgelöst oder auch selbsttätig.

Der Normalbetrieb des Cloud-Zentralmoduls ist insbesondere für die unmittelbare Steuerung der Vorrichtung oder Anlage vorgesehen. Dabei läuft das Steuerungsprogramms in der Cloud SPS ab und über das mindestens eine Ein-Ausgabe-Modul der speicherprogrammierbaren Steuerung erfolgt eine Aus- und Eingabe von Steuer- und/oder Sensor-Daten für/von der der Vorrichtung oder Anlage. Dabei kann die Steuerung der Vorrichtung beziehungsweise Anlage neben dem Ein-Ausgabe-Modul auch über weitere Ein-Ausgabe-Einheiten wie beispielsweise eine verteilte Peripherie oder vergleichbare Einrichtungen erfolgen. Diese weitere Einrichtung kann beispielsweise auch über das Cloud-Zentralmodul mit der Cloud-SPS verbunden sein.

Es kann vorgesehen sein, dass ein aktueller Betriebszustand der Cloud-SPS auf der Anzeige des Cloud-Zentralmoduls angezeigt wird. Weiterhin kann vorgesehen sein, dass ein aktueller Betriebszustand der Cloud-SPS vermittels des mindestens einen Bedienelements des Cloud-Zentralmoduls änderbar ist.

Auf diese Weise kann sowohl der Betriebszustand der Cloud-SPS auf beispielsweise einem Display des Cloud-Zentralmoduls ablesbar sein, als auch dieser Betriebszustand durch beispielsweise entsprechende Tasten oder Bedienelemente des Cloud-Zentralmoduls geändert werden. So kann beispielsweise durch eine entsprechende Bedieneraktion am Cloud-Zentralmodul die Cloud-SPS vom "Run"-Betrieb in "Stopp"-Zustand gesetzt werden - oder auch in den "Einricht"-Betrieb um beispielsweise Änderungen am Steuerungsprogramm in der Cloud-SPS vornehmen zu können.

Dies vereinfacht die Anpassung bestehender Automatisierungssysteme an Cloud-basierte Automatisierungsmechanismen, indem für den Nutzer beziehungsweise Bediener eines solchen Systems ein Zugriff auch auf die Cloud-basierten Anteile des Systems über Geräte vor Ort (z.B. in der Nähe der gesteuerten Vorrichtung oder Anlage) vorgenommen werden können. Dabei kann dieser Zugriff durchaus auch in Anlehnung an die Bedienung herkömmlicher speicherprogrammierbarer Steuerungen erfolgen, was den Übergang zu einem Cloud-basierten System zusätzlich vereinfacht.

In einer vorteilhaften Ausgestaltung kann weiterhin vorgesehen sein, dass die Cloud-SPS zur Ausführung des Steuerungsprogramms unter Verwendung eines Cloud-Prozessabbild-Speicherbereichs innerhalb des Datennetzwerks zur Speicherung von Ein- und Ausgabe-Daten des Steuerungsprogramms ausgebildet und eingerichtet ist. Weiterhin kann dabei vorgesehen sein, dass im Cloud-Zentralmodul ein Modul-Prozessabbild-Speicherbereich vorgesehen ist, wobei weiterhin eine Synchronisierung der Daten im Cloud-Prozessabbild-Speicherbereich und im Modul-Prozessabbild-Speicherbereich vorgesehen ist.

Dabei kann die Cloud-SPS beispielsweise zur zyklischen Ausführung des Steuerungsprogramms ausgebildet und eingerichtet sein. Die zyklische Ausführung des Steuerungsprogramms innerhalb der Cloud-SPS kann beispielsweise gemäß der vorliegenden Beschreibung ausgebildet und eingerichtet sein und insbesondere die Verwendung des Cloud-Prozessabbild-Speicherbereichs im Rahmen der zyklischen Ausführung des Steuerungsprogramms umfassen.

Die Synchronisierung des Cloud-Prozessabbild-Speicherbereichs und des Modul-Prozessabbild-Speicherbereichs kann beispielsweise durch die Aktualisierung eines Werts in einem der beiden Speicherbereiche oder beiden erfolgen und/oder auch zu bestimmten, festgelegten Zeitpunkten und/oder auch in entsprechend festgelegten oder festlegbaren Zeitabständen. Bei einer zyklischen Ausführung des Steuerungsprogramms in der Cloud-SPS kann die Synchronisierung beispielsweise zwischen zwei Programmzyklen erfolgen. Die Synchronisation der genannten Prozessabbilder kann auch derart erfolgen, dass im Prozessabbild-Speicherbereich gespeicherte Ausgangsdaten, welche für eine Übertragung von der Cloud-SPS zum mindestens einen Ein-Ausgabe-Modul vorgesehen sind, zu einem anderen Zeitpunkt synchronisiert werden wie Eingangsdaten, welche zur Übertragung von dem mindestens einen Ein-Ausgabe-Modul zur Cloud-SPS vorgesehen sind.

Weiterhin kann die Synchronisierung derart vorgesehen sein, dass der Cloud-Prozessabbild-Speicherbereich als Prozessabbild im Rahmen der Ausführung des Steuerungsprogramms, insbesondere der zyklischen Ausführung des Steuerungsprogramms, verwendet wird. Weiterhin kann vorgesehen sein, dass der Modul-Prozessabbild-Speicherbereich zur Pufferung der Daten für das mindestens eine Ein-Ausgabe-Modul beziehungsweise von dem mindestens ein Ein-Ausgabe-Modul im Rahmen der Übertragung dieser Daten von beziehungsweise an das Datennetzwerk verwendet wird.

Der Modul-Prozessabbild-Speicherbereich kann so z.B. auch zum Sammeln und Zwischenspeichern beispielsweise vom mindestens einen Ein-Ausgabe-Modul kommenden und für die Cloud-SPS vorgesehenen Daten dienen beziehungsweise eingerichtet und ausgebildet sein.

Auf diese Weise ist beispielsweise eine gewissen Entkopplung der Ausführung des Steuerungsprogramms von der Datenkommunikation über den Rückwandbus und das mindestens ein Ein-Ausgabe-Modul zur gesteuerten Vorrichtung oder Anlage gegeben, was die Anpassung bestehender Automatisierungssysteme an Cloud-basierte Mechanismen weiter vereinfacht.

Weiterhin kann das Cloud-Zentralmodul eine Schnittstelle zur Kommunikation mit einem wechselbaren Datenträger aufweisen. Dabei kann das Cloud-Zentralmodul zudem zur Übertragung von auf dem wechselbaren Datenträger gespeicherten Daten an das Datennetzwerk ausgebildet und eingerichtet sein.

Die Schnittstelle kann eine drahtgebundene oder drahtlose Schnittstelle zur Kommunikation des Cloud-Zentralmoduls mit dem wechselbaren Datenträger sein. Weiterhin kann die Schnittstelle für den wechselbaren Datenträger auch mechanisch z. B. zur Aufnahme und/oder mechanischen Halterung oder Fixierung des wechselbaren Datenträgers ausgebildet und eingerichtet sein. Zur Kommunikation mit dem wechselbaren Datenträger kann die entsprechende Schnittstelle des Cloud-Zentralmoduls Kontaktelemente oder Steckelemente zum Aufbau einer drahtgebundenen Kommunikationsverbindung zwischen Cloud-Zentralmodul und wechselbarem Datenträger umfassen. Für eine drahtlose Kommunikation zwischen Cloud-Zentralmodul und wechselbarem Datenträger kann die Schnittstelle beispielsweise eine oder mehrere Antennen umfassen.

Der wechselbare Datenträger kann beispielsweise als eine Speicherkarte, ein USB-Stick, eine mobile Kommunikationseinrichtung (z.B. ein Smartphone oder ein Tablet-Computer) oder eine vergleichbare mobile Datenspeichereinrichtungen ausgebildet und eingerichtet sein. Dabei kann beispielsweise vorgesehen sein, dass der Datenträger zur Speicherung von Identifikationsdaten oder auch Kenndaten für die Cloud-SPS vorgesehen und eingerichtet ist bzw. dass solche Daten darauf gespeichert sind. Weiterhin kann vorgesehen sein, dass auf dem mobilen Datenträger beispielsweise ein Steuerungsprogramm für die Cloud-SPS oder auch Engineering- und/oder Parametrier-Informationen für die Cloud-SPS, für das Cloud-Zentralmodul und/oder für die speicherprogrammierbare Steuerung gespeichert oder speicherbar und auslesbar sind.

Weiterhin kann das Cloud-Zentralmodul zum Auslesen von Daten vom wechselbaren Datenträger sowie zur Verarbeitung oder Weiterleitung der genannten Daten ausgebildet und eingerichtet sein. So kann das Cloud-Zentralmodul beispielsweise zum Auslesen von Identifikations-Informationen bzw. Kennungs- oder technischen Informationen bzgl. der Cloud-SPS vom wechselbaren Datenträger sowie zur Weiterleitung dieser Daten an das Datennetzwerk ausgebildet und eingerichtet sein. Weiterhin kann das Cloud-Zentralmodul auch zum Auslesen eines Steuerprogramms vom wechselbaren Datenträger und dessen Übertragung zur Cloud-SPS ausgebildet und eingerichtet sein.

In einer weiteren vorteilhaften Ausgestaltung kann das Cloud-Zentralmodul zur Übertragung von Initialisierungs-Informationen an das Datennetzwerk ausgebildet und eingerichtet sein, wobei vermittels der Übertragung der Initialisierungs-Informationen an das Datennetzwerk die Implementierung einer Cloud-SPS im Datennetzwerk und/oder die Zuordnung der Cloud-SPS zum Cloud-Zentralmodul ausgelöst werden kann.

Dabei können die Initialisierungs-Informationen im Cloud-Zentralmodul gespeichert sein oder auf einem mit dem Cloud-Zentralmodul verbundenen wechselbaren Datenträger oder auch einer mit dem Cloud-Zentralmodul verbundenen Recheneinrichtung (z.B. einem Server oder Programmiergerät). Die Übertragung der Initialisierungs-Information kann beispielsweise durch eine Benutzereingabe ausgelöst werden, oder auch durch ein Verbinden des Cloud-Zentralmoduls mit einer Stromversorgung oder ein Einschalten des Cloud-Zentralmoduls.

Die Initialisierungs-Informationen können beispielsweise einen oder mehrere Initialisierungs-Befehle oder - Informationen, Kenn-Informationen bzw. ID-Informationen bzgl. der Cloud-SPS (wie z. B. eine Modell-Kennung, Kennungen für Eigenschaften, Kommunikationsparameter, Netzwerk-Kennungen usw. für die Cloud-SPS) und Cloud-Zentralmodul-Informationen, insbesondere zum Aufbau einer Kommunikation zwischen Cloud-Zentralmodul und Cloud-SPS, umfassen(z.B. in eine Netzwerkkennung, Kommunikations-Eigenschaften, sonstige Eigenschaften, usw. des Cloud-Zentralmoduls).

Die Implementierung, der Cloud-SPS kann beispielsweise durch eine sogenannte Instanziierung einer Cloud-SPS-Software-Instanz im Datennetzwerk erfolgen. Weiterhin kann die Implementierung einer Cloud-SPS auch die Zuordnung einer im Datennetzwerk implementierten oder instanziierten Cloud-SPS zur speicherprogrammierbaren Steuerung bzw. dem Cloud-Zentralmodul umfassen oder aus einer solchen bestehen. Die genannte Implementierung der Cloud-SPS und/oder die Zuordnung der Cloud-SPS zum Cloud-Zentralmodul bzw. der speicherprogrammierbaren Steuerung kann beispielsweise auch Teil des Einricht-Betriebs des Cloud-Zentralmoduls gemäß der vorliegenden Beschreibung sein.

Weiterhin kann das Cloud-Zentralmodul zur Übertragung eines Steuerungsprogramms an die Cloud-SPS ausgebildet und eingerichtet sein.

Dabei kann das Steuerungsprogramm im Cloud-Zentralmodul beispielsweise in einer Speichereinrichtung des Cloud-Zentralmoduls gespeichert sein oder auch auf einem mit dem Modul verbundenen wechselbaren Datenträger. Weiterhin kann das Steuerungsprogramm auch auf einem mit dem Cloud-Zentralmodul verbundenen Server oder einer entsprechenden Datenverarbeitungseinheit gespeichert sein.

Die Übertragung des Steuerungsprogramms an die Cloud-SPS kann beispielsweise durch eine Benutzereingabe ausgelöst werden. Weiterhin kann die Übertragung des Steuerungsprogramms auch durch die Verbindung des Cloud-Zentralmoduls mit einem Stromnetz oder einer Stromversorgung, die Verbindung des Cloud-Zentralmoduls mit einem wechselbaren Datenträger oder durch ein Einschalten des Cloud-Zentralmoduls ausgelöst werden. Weiterhin kann die Übertragung des Steuerungsprogramms an die Cloud-SPS nach dem Erstellen, dem Einrichten und/oder dem Zuordnen der Cloud-SPS-Instanz erfolgen und insbesondere nach dem Instanziieren, Einrichten und/oder Zuordnen der Cloud-SPS ausgelöst werden, insbesondere selbsttätig ausgelöst werden.

Die vorstehend genannten Ausgestaltungsmöglichkeiten vereinfachen die Anpassung bestehender Automatisierungssysteme an Cloud-basierte Automatisierungsmechanismen weiterhin, da durch das Vorhalten von für die Cloud-basierte Automatisierung relevanten Informationen und Daten im Cloud-Zentralmodul, bzw. diesem zugeordnete Speichereinrichtungen, weniger oder auch keine unmittelbaren Einricht-Tätigkeiten direkt im Datennetzwerk vorgenommen werden müssen, sondern die entsprechend notwendigen Informationen bereits im Cloud-Zentralmodul vor-implementiert sind. Auf diese Weise kann ein Cloud-basierter Automatisierungsmechanismus mit verringertem oder deutlich reduziertem Implementierungsaufwand für die Cloud-SPS unmittelbar im Datennetzwerk erfolgen.

In einer vorteilhaften Ausgestaltung ist das Cloud-Zentralmodul nicht zur Ausführung eines Steuerungsprogramms zur Steuerung einer mit der speicherprogrammierbaren verbundenen Vorrichtung oder Anlage ausgebildet und eingerichtet.

In diesem Fall umfasst das Cloud-Zentralmodul keine Ablaufumgebung für ein Steuerungsprogramm, sodass die Steuerung einer Anlage oder auch Vorrichtung unter Verwendung des Cloud-Zentralmoduls in der speicherprogrammierbaren Steuerung nur im Zusammenhang mit einer entsprechenden Cloud-SPS oder einer vergleichbaren externen SPS möglich ist.

Auf diese Weise lässt sich die Anpassung eines Automatisierungssystems an einen Cloud-basierten Automatisierungsmechanismus mit verringertem Aufwand, insbesondere Hardware-Aufwand, erreichen.

Die vorstehend genannte Aufgabe wird weiterhin gelöst von einem Cloud-Zentralmodul für eine modulare speicherprogrammierbare Steuerung, wobei eine ursprüngliche modulare speicherprogrammierbare Steuerung vorgesehen ist, welche ein Zentralmodul zum Ablauf eines Steuerungsprogramms zur Erzeugung einer Steuerungsfunktionalität für eine an die ursprüngliche speicherprogrammierbare Steuerung angeschlossene Vorrichtung oder Anlage umfasst. Außerdem umfasst die ursprüngliche speicherprogrammierbare Steuerung mindestens ein Ein-Ausgabe-Modul zur Ein- und/oder Ausgabe von Daten und/oder Werten von der bzw. an die Vorrichtung oder Anlage. Dabei ist das Zentralmodul und das mindestens eine Ein-Ausgabe-Modul über einen Rückwandbus mit der ursprünglichen modularen speicherprogrammierbaren Steuerung verbunden. Das Cloud-Zentralmodul ist zur Verbindung mit einem Datennetzwerk ausgebildet und eingerichtet, wobei im Datennetzwerk eine Cloud-SPS implementiert ist, welche zum Ablauf des Steuerungsprogramms ausgebildet und eingerichtet ist. Weiterhin ist das Cloud-Zentralmodul derart ausgebildet und eingerichtet, dass der Aufbau bzw. die Herstellung der modularen speicherprogrammierbaren Steuerung ausgehend von der ursprünglichen modularen speicherprogrammierbaren Steuerung dadurch erfolgt, dass das Zentralmodul durch das Cloud-Zentralmodul ersetzt wird. Weiterhin ist das Cloud-Zentralmodul derart ausgebildet und eingerichtet, dass, wenn die modulare speicherprogrammierbare Steuerung über das Cloud-Zentralmodul mit dem Datennetzwerk verbunden ist, beim Ablauf des Steuerungsprogramms in der Cloud-SPS die Steuerungsfunktionalität für die angeschlossene Vorrichtung oder Anlage erzeugt wird.

Mit dieser Ausgestaltung kann erreicht werden, dass ein bestehendes ursprüngliches Steuerungssystem, umfassend eine ursprüngliche speicherprogrammierbare Steuerung, durch Austausch des ursprünglichen Zentralmoduls gegen das Cloud-Zentralmodul und Verbindung dieses Cloud-Zentralmoduls mit einer Cloud-SPS relativ einfach in ein Cloud-basiertes Steuerungssystem überführt werden kann. Dadurch, dass unter Umständen nur das Zentralmodul gegen das Cloud-Zentralmodul ausgetauscht werden muss, die restlichen Module der modularen speicherprogrammierbaren Steuerung aber ggf. unverändert verbleiben können, muss die Verkabelung der speicherprogrammierbaren Steuerung mit der gesteuerten Vorrichtung oder Anlage ggf. nur relativ wenig oder auch gar nicht verändert werden. Dies reduziert den Aufwand bei der Anpassung eines bestehenden Automatisierungssystems an einen Cloud-basierten Mechanismus weiter. Insbesondere wenn die Cloud-SPS derart ausgebildet und eingerichtet ist, dass das vorher in der ursprünglichen speicherprogrammierbaren Steuerung ablaufende Steuerungsprogramm unmittelbar dort ablauffähig ist, kann nach einer entsprechenden Parametrierung der Cloud-SPS und des Cloud-Zentralmoduls die Steuerung der Anlage bzw. Vorrichtung mit vergleichsweise wenig Aufwand vom ursprünglichen Steuerungssystem auf das Cloud-basierte Steuerungssystem umgestellt werden.

Dabei können das Cloud-Zentralmodul, die modulare speicherprogrammierbare Steuerung, das mindestens Ein-Ausgabe-Modul, der Rückwandbus, das Datennetzwerk und/oder die Cloud-SPS gemäß der vorliegenden Beschreibung ausgebildet und eingerichtet sein.

Das Cloud-Zentralmodul kann weiterhin auch Komponenten zur Ein- und/oder Ausgabe von Daten oder Werten umfassen. Weiterhin kann das Cloud-Zentralmodul dieselben Kommunikationsschnittstellen aufweisen, wie das Zentralmodul der ursprünglichen modularen speicherprogrammierbaren Steuerung, wobei das Cloud-Zentralmodul zusätzlich noch eine Schnittstelle zur Kommunikation mit dem Datennetzwerk umfassen kann.

Das Zentralmodul der ursprünglichen modularen speicherprogrammierbaren Steuerung kann als sogenanntes "CPU-Modul" einer speicherprogrammierbaren Steuerung ausgebildet und eingerichtet sein, in welchem die zentrale Steuerungslogik und Ablaufumgebung der speicherprogrammierbaren Steuerung vorgesehen ist.

In einer vorteilhaften Ausgestaltung kann die Bauform des Zentralmoduls der ursprünglichen modularen speicherprogrammierbaren Steuerung der Bauform des Cloud-Zentralmoduls der modularen speicherprogrammierbaren Steuerung derart entsprechen, dass nach einem Entfernen des Zentralmoduls aus der ursprünglichen speicherprogrammierbaren Steuerung das Cloud-Zentralmodul zum Aufbau bzw. der Herstellung der modularen speicherprogrammierbaren Steuerung ohne weitere Veränderungen an der speicherprogrammierbaren Steuerung an den Platz des Zentralmoduls gesetzt werden kann. Weiterhin vorteilhafterweise haben das Zentralmodul und Cloud-Zentralmodul eine gleiche äußere Bauform und eine gleiche Lage und Ausprägung der jeweiligen Rückwandbus-Schnittstellen.

Weiterhin kann die Cloud-SPS derart ausgebildet und eingerichtet sein, dass der Ablauf des Steuerungsprogramms in der Cloud-SPS dem Ablauf des Steuerungsprogramms im Zentralmodul der ursprünglichen modularen speicherprogrammierbaren Steuerung entspricht. Dabei kann der Ablauf des Steuerungsprogramms beispielsweie als zyklischer Programmablauf gemäß der vorliegenden Beschreibung ausgestaltet sein. Beispielsweise kann im Rahmen des Ablaufs des Steuerungsprogramms auch die Verwendung eines Prozessabbilds gemäß der vorliegenden Beschreibung, sowohl im Zentralmodul als auch der Cloud-SPS, vorgesehen sein.

Unter einer Steuerungsfunktionalität für die Vorrichtung oder Anlage wird hier das vollständige vom Steuerungsprogramm erzeugte prinzipielle Steuerungsverhalten der Vorrichtung oder Anlage verstanden. Dies bedeutet beispielsweise, dass das beim Ablauf des Steuerungsprogramms im Zentralmodul der ursprünglichen modularen speicherprogrammierbaren Steuerung erzeugte gesamte Steuerungsverhalten der gesteuerten Vorrichtung oder Anlage genauso in hinreichender Genauigkeit entsteht, wenn das Steuerungsprogramm in der Cloud-SPS abläuft und diese mit der modularen speicherprogrammierbaren Steuerung und über diese mit der gesteuerten Vorrichtung oder Anlage verbunden ist.

Dabei kann die Vorrichtung oder Anlage gemäß der vorliegenden Beschreibung ausgebildet und eingerichtet sein.

Auch das Datennetzwerk kann beispielsweise gemäß der vorliegenden Beschreibung ausgebildet und eingerichtet sein, insbesondere als eine sogenannte Cloud ausgebildet und eingerichtet sein und/oder eine solche umfassen.

Das sowohl im Zentralmodul der ursprünglichen speicherprogrammierbaren Steuerung als auch in der Cloud-SPS das Steuerungsprogramm abläuft, kann beispielsweise bedeuten, dass der in beiden Fällen jeweils unmittelbar ablaufende Programmcode auf denselben Source-Code oder denselben geräteunabhängigen "Zwischenbinärcode" (z.B. Java Bytecode) für das Steuerungsprogramm zurückgeht. Weiterhin kann auch vorgesehen sein, dass sowohl Zentralmodul der ursprünglichen modularen speicherprogrammierbaren Steuerung als auch in der Cloud-SPS derselbe unmittelbare Programmcode (z.B. "Binary Code" oder auch "Binärcode" genannt) abläuft. Dabei kann weiterhin vorteilhafterweise vorgesehen sein, dass sowohl in dem aus Cloud-SPS und modularer speicherprogrammierbarer Steuerung bestehenden Steuerungssystem als auch in der ursprünglichen modularen speicherprogrammierbaren Steuerung die gleiche Modul und/oder SPS- und/oder CPU-Parametrierung verwendet wird. Alternativ kann auch vorgesehen sein, dass nach dem Ersetzen des Zentralmoduls durch das Cloud-Zentralmodul die Parametrierung entsprechend angepasst werden muss.

Zur Klarstellung der verwendeten Begriffe sei hierbei nochmals erwähnt, dass die "modulare speicherprogrammierbare Steuerung" aus der "ursprünglichen modularen speicherprogrammierbaren Steuerung" dadurch entsteht, dass das Zentralmodul entnommen und durch das Cloud-Zentralmodul ersetzt wird.

In einer vorteilhaften Ausgestaltung sind darüber hinaus zum Erhalt der modularen speicherprogrammierbaren Steuerung keine weiteren Änderungen der Hardware vorgesehen. Alternativ kann noch vorgesehen sein, dass beispielsweise die Belegung von Eingabe-Ausgabe-Baugruppen oder Kontaktelementen angepasst werden muss. Weiterhin kann vorgesehen sein, dass zudem die Verbindung mit weiteren Kommunikations-, Automatisierungs- oder auch Peripherie-Netzwerken noch adaptiert werden muss. Dabei kann der Austausch des Zentralmoduls gegen das Cloud-Zentralmodul derart ausgestaltet sein, dass das Zentralmodul vom Rückwandbus gelöst und das Cloud-Zentralmodul an dessen Stelle, insbesondere am selben Platz, mit dem Rückwandbus verbunden wird. Weiterhin werden auch zusätzliche bestehende Kommunikationsverbindungen mit dem Zentralmodul gelöst und nachfolgend mit dem Cloud-Zentralmodul wieder verbunden. Zudem wird noch die Verbindung des Datennetzwerks mit dem Cloud-Zentralmodul hergestellt.

Das Cloud-Zentralmodul kann auch derart ausgestaltet sein, dass es auf die gleiche Weise beispielsweise an einem Träger oder Rückwandbus mechanisch fixierbar oder fixiert ist, wie das Zentralmodul. Dann wäre beim Austausch der Module das Cloud-Zentralmodul mechanisch auf dieselbe Weise fixiert, wie das Zentralmodul vor dem Entnehmen fixiert war.

Weiterhin kann vorgesehen sein, dass das Cloud-Zentralmodul nicht zum Ablauf des Steuerungsprogramms zur Steuerung mit der modularen speicherprogrammierbaren Steuerung verbundenen Vorrichtung oder Anlage ausgebildet und eingerichtet ist. Dabei kann insbesondere vorgesehen sein, dass das Cloud-Zentralmodul keine Ablaufumgebung zum Ablauf von Steuerungsprogrammen zur Steuerung von mit der modularen speicherprogrammierbaren Steuerung verbundenen Vorrichtungen oder Anlagen aufweist. Auf diese Weise lässt sich der Hardware-Aufwand bei der Anpassung eines bestehenden Automatisierungssystems an einen Cloud-basierten Automatisierungsmechanismus reduzieren.

Das Cloud-Zentralmodul kann weiterhin derart ausgebildet und eingerichtet sein, dass zum Aufbau einer modularen speicherprogrammierbaren Steuerung gemäß der vorliegenden Beschreibung ausgehend von einer ursprünglichen modularen speicherprogrammierbaren Steuerung gemäß der vorliegenden Beschreibung nur das Zentralmodul der ursprünglichen modularen speicherprogrammierbaren Steuerung durch ein Cloud-Zentralmodul gemäß der vorliegenden Beschreibung ersetzt wird. Insbesondere kann weiterhin vorgesehen sein, dass zum Aufbau der modularen speicherprogrammierbaren Steuerung darüber hinaus keine weiteren Veränderungen der Hardware gegenüber der ursprünglichen modularen speicherprogrammierbaren Steuerung vorgenommen werden.

Weiterhin kann das Cloud-Zentralmodul derart ausgebildet und eingerichtet sein, dass nach dem Aufbau der modularen speicherprogrammierbaren Steuerung und der Verbindung des Cloud-Zentralmoduls mit dem Datennetzwerk die Steuerungsfunktionalität für die angeschlossene Vorrichtung oder Anlage unter Verwendung maximal einer manuellen Benutzereingabe am Cloud-Zentralmodul ausgelöst wird. Dabei kann eine Benutzereingabe durchaus aus mehreren Bedienschritten bestehen (z.B. Eingabe eines Wertes oder Befehls plus nachfolgender Bedienung einer "Return"-Taste oder auch Bewegen eines Auswahlfelds oder Cursors und nachfolgender Bedienung einer "Return"-Taste).

Dabei kann insbesondere vorgesehen sein, dass die Steuerungsfunktionalität selbsttätig ausgelöst wird, beispielsweise beim Einschalten des Cloud-Zentralmoduls, der Herstellung einer Stromversorgung für das Cloud-Zentralmodul oder auch das Herstellen eines Kontakts des Cloud-Zentralmoduls mit einem mobilen Datenträger. Alternativ kann die Herstellung der Steuerungsfunktionalität auch durch beispielsweise eine manuelle Benutzereingabe über ein Bedienelement am Cloud-Zentralmodul oder auch einem Rechner oder ein mit dem Cloud-Zentralmodul verbundenes Programmiergerät ausgelöst werden.

Die Steuerungsfunktionalität für die angeschlossene Vorrichtung ist beispielsweise dann hergestellt, wenn das Automatisierungssystem bestehend aus Cloud-SPS, modularer speicherprogrammierbarer Steuerung und der damit verbundenen Vorrichtung oder Anlage unmittelbar bereit zur Steuerung der Anlage oder Vorrichtung ist.

Die vorstehend genannte Aufgabe wird weiterhin gelöst durch eine speicherprogrammierbare Steuerung, umfassen ein Cloud-Zentralmodul gemäß der vorliegenden Beschreibung zum Anschluss an ein Datennetzwerk gemäß der vorliegenden Beschreibung, mindestens ein Ein-Ausgabe-Modul gemäß der vorliegenden Beschreibung zum Anschluss an eine zu steuernde Vorrichtung oder Anlage gemäß der vorliegenden Beschreibung, sowie einen Rückwandbus gemäß der vorliegenden Beschreibung, wobei die speicherprogrammierbare Steuerung zur Kommunikation zwischen Cloud-Zentralmodul und dem mindestens einen Ein-Ausgabe-Modul über den Rückwandbus ausgebildet und eingerichtet ist.

Weiterhin wird die vorstehend genannte Aufgabe gelöst durch ein Verfahren zur Steuerung einer Vorrichtung oder Anlage unter Verwendung einer Cloud-SPS gemäß der vorliegenden Beschreibung sowie einer speicherprogrammierbaren Steuerung gemäß der vorliegenden Beschreibung, wobei ein Steuerungsprogramm zur Steuerung der Vorrichtung in der Cloud-SPS zyklisch abläuft.
Dabei werden weiterhin zwischen dem Ende eines abgelaufenen Programmzyklus des Steuerungsprogramms und dem Beginn eines nächsten Programmzyklus des Steuerungsprogramms vom Steuerungsprogramm während des abgelaufenen Programmzyklus erzeugten Ausgangsdaten von der Cloud-SPS an die speicherprogrammierbare Steuerung, und von der Cloud-SPS für den nächsten Programmzyklus benötigte Eingangsdaten von der speicherprogrammierbare Steuerung an die Cloud-SPS übertragen.
Dabei werden innerhalb der speicherprogrammierbaren Steuerung die Ausgangsdaten vom Cloud-Zentralmodul über den Rückwandbus an das mindestens eine Ein- Ausgabe-Modul und die Eingangsdaten vom mindestens einen Ein-Ausgabe-Modul über den Rückwandbus zum Cloud-Zentralmodul übertragen.

Der vorstehend genannte zyklische Ablauf des Steuerungsprogramms kann beispielsweise gemäß der vorliegenden Beschreibung eingerichtet und ausgestaltet sein.

In einer weiteren vorteilhaften Ausgestaltung kann die Cloud-SPS zur zyklischen Ausführung des Steuerungsprogramms unter Verwendung eines Cloud-Prozessabbild-Speicherbereichs innerhalb des Datennetzwerks ausgebildet und eingerichtet sein, wobei weiterhin im Cloud-Zentralmodul ein Modul-Prozessabbild-Speicherbereich vorgesehen ist und zwischen dem Ende des abgelaufenen Programmzyklus des Steuerungsprogramms und des Beginn des nächsten Zyklus des Steuerungsprogramms die Ausgangsdaten vom Cloud-Prozessabbild-Speicherbereich zum Modul-Prozessabbild-Speicherbereich und die Eingangsdaten vom Modul-Prozessabbild-Speicherbereich zum Cloud-Prozessabbild-Speicherbereich übertragen werden.

Dabei kann vorgesehen sein, dass der Cloud-Prozessabbild-Speicherbereich innerhalb der Cloud-SPS-Instanz bzw. Ablaufumgebung eingerichtet und vorgesehen ist.

Durch die Verwendung und Synchronisierung der Prozessabbild-Speicherbereiche in der Cloud-SPS und im Cloud-Zentralmodul vereinfacht sich die Synchronisierung des Ablaufs des Steuerungsprogramms in der Cloud-SPS, indem die Kommunikation zwischen Cloud-SPS und Cloud-Zentralmodul zumindest teilweise von der Kommunikation innerhalb der speicherprogrammierbaren Steuerung entkoppelbar ist bzw. entkoppelt wird. Auf diese Weise lassen sich die Kommunikationsmechanismen einfacher gestalten und ein angestrebtes Antwortverhalten oder Echtzeitverhalten des gesamten Automatisierungssystems ist so einfacher realisierbar, einrichtbar und/oder planbar.

Die vorstehend genannte Aufgabe wird weiterhin gelöst durch ein Verfahren zum Umrüsten der Steuerung für eine Vorrichtung oder Anlage ausgehend von einer Steuerung mit einer mit der Vorrichtung oder Anlage verbundenen ursprünglichen speicherprogrammierbaren Steuerung gemäß der vorliegenden Beschreibung zu einer Cloud-basierten Steuerung unter Verwendung einer Cloud-SPS gemäß der vorliegenden Beschreibung und einer speicherprogrammierbaren Steuerung gemäß der vorliegenden Beschreibung. Dabei umfasst das Verfahren zum Umrüsten die folgenden Schritte:
a) Beenden der Steuerung der Vorrichtung oder Anlage durch Stoppen der ursprünglichen speicherprogrammierbaren Steuerung;
b) Umrüsten auf die speicherprogrammierbare Steuerung durch Trennen des Zentralmoduls vom Rückwandbus und Verbinden des Cloud-Zentralmoduls mit dem Rückwandbus;
c)Herstellen einer Kommunikationsverbindung des Cloud-Zentralmoduls zur Cloud-SPS;
d) Wiederaufnahme der Steuerung der Vorrichtung oder Anlage durch Starten der modularen speicherprogrammierbaren Steuerung und der Cloud-SPS.

Dabei kann das Ersetzen des Zentralmoduls durch das Cloud-Zentralmodul gemäß der vorliegenden Beschreibung ausgebildet und eingerichtet sein. Weiterhin kann im Rahmen des Herstellens der Kommunikationsverbindung des Cloud-Zentralmoduls zur Cloud-SPS auch die Instanziierung der Cloud-SPS sowie die Parametrierung und Übertragung des Steuerungsprogramms zur Cloud-SPS erfolgen. Dabei kann das Herstellen der Kommunikationsverbindung des Cloud-Zentralmoduls zur Cloud-SPS selbsttätig oder mit einer oder auch mehreren manuellen Bedienaktionen erfolgen. Auch das Wiederaufnehmen der Steuerung der Vorrichtung oder Anlage kann beispielsweise selbsttätig erfolgen oder durch eine oder auch mehrere manuelle Bedienaktionen ausgelöst werden.

In einer vorteilhaften Ausgestaltung kann vorgesehen sein, dass der vorstehend genannte Verfahrensschritt c) die nachfolgend genannten Verfahrensschritte umfasst:
c1) Herstellen einer Kommunikationsverbindung des Cloud-Zentralmoduls zu einem Datennetzwerk gemäß der vorliegenden Beschreibung;
c2) Übertragung von Instanziierungs-Informationen für die Cloud-SPS vom Cloud-Zentralmodul zum Datennetzwerk;
c3) Erzeugen und/oder Einrichten der Cloud-SPS im Datennetzwerk;
c4) Aufbau der Kommunikation zwischen Cloud-SPS und Cloud-Zentralmodul.

Dabei können die Instanziierungs-Informationen für die Cloud-SPS beispielsweise einen Lizenzschlüssel für die Cloud-SPS, eine Bestellnummer für die Cloud-SPS, eine ID-Kennung für die Cloud-SPS oder auch technische Merkmale oder Features der Cloud-SPS umfassen. Dabei können diese Informationen beispielsweise im Cloud-Zentralmodul oder auch auf einem mit dem Cloud-Zentralmodul verbundenen mobilen Datenträger gespeichert sein. Weiterhin können die Instanziierungs-Informationen auch eine Parametrierung für die Cloud-SPS und/oder auch das Steuerungsprogramm - als Source Code und/oder als dessen Übersetzung in die entsprechende Maschinensprache (eine "compilierte" Version) - umfassen.

Das Erzeugen der Cloud-SPS kann beispielsweise das Erstellen einer entsprechenden Software-Instanz für die Cloud-SPS umfassen. Das Einrichten der Cloud-SPS kann beispielsweise ein Parametrieren der Cloud-SPS sowie ein Laden eines Steuerprogramms in die Cloud-SPS umfassen.

Weiterhin kann vorgesehen sein, dass vor, während oder nach dem vorstehend genannten Verfahrensschritt a) (und insbesondere vor Verfahrensschritt b)) der nachfolgende Verfahrensschritt ausgeführt wird:
a1) Übertragen des Steuerungsprogramms und/oder Parametrier-Informationen der ursprünglichen speicherprogrammierbaren Steuerung und/oder Projekt-Informationen bezüglich des Steuerungsprogramms von der ursprünglichen speicherprogrammierbaren Steuerung auf einem mobilen Datenträger.

Dabei kann dann weiterhin vorgesehen sein, dass unmittelbar vor Verfahrensschritt c), nach Verfahrensschritt c) oder auch während der Durchführung von Verfahrensschritt c), inklusive der vorstehend genannten Unterschritte, die nachfolgenden Verfahrensschritte ausgeführt werden:
c5) Übertragen des Steuerungsprogramms und/oder der Parametrier-Informationen der ursprünglichen speicherprogrammierbaren Steuerung und/oder der Projekt-Informationen bezüglich des Steuerungsprogramms vom mobilen Datenträger in das Cloud-Zentralmodul, und
c6) Weiterleiten des Steuerungsprogramms und/oder der Parametrier-Informationen der ursprünglichen speicherprogrammierbaren Steuerung und/oder der Projekt-Informationen bezüglich des Steuerungsprogramms vom Cloud-Zentralmodul zum Datennetzwerk oder zur Cloud-SPS.

Dabei wird unter den Parametrier-Informationen beispielsweise die Parametrierung der speicherprogrammierbaren Steuerung verstanden. Alternativ kann die Parametrier-Information auch nur das Zentralmodul der speicherprogrammierbaren Steuerung betreffen.

Die genannten Projekt-Informationen bezüglich des Steuerungsprogramms können die bei der Erstellung des Steuerungsprogramms in einem sogenannten "Engineering-System" erzeugten Zusatzinformationen über das Automatisierungssystem umfassen (z.B. sogenannten "Projektinformationen"). Dazu können beispielsweise das Steuerungsprogramm selbst, sowohl in einer Source-Code-Version als auch in compilierter Version, Parametrierungen sowie weitere Informationen über das verwendete Automatisierungssystem, wie beispielsweise Moduleigenschaften der Module der speicherprogrammierbaren Steuerung sowie Eigenschaften von angeschlossenen Sensoren und Aktoren umfassen.

Der mobile Datenträger kann beispielsweise gemäß der vorliegenden Beschreibung ausgestaltet und eingerichtet sein.

Weitere Ausgestaltungen finden sich in den Unteransprüchen.

Nachfolgend wird die vorliegende Erfindung mit Bezug auf die beigefügten Zeichnungen beispielhaft näher erläutert.

Es zeigen
Figur 1: beispielhafte Ausgestaltung eines Cloud-basierten Automatisierungssystems zur Steuerung eines Roboters
Figur 2 - Figur 5: Darstellung des Umbaus einer herkömmlichen Steuerungseinrichtung zur Cloud-basierten Steuerungseinrichtung gemäß Figur 1
Figur 6: Darstellung der Kommunikation zwischen einer Cloud-basierten Steuerung und dem gesteuerten System.

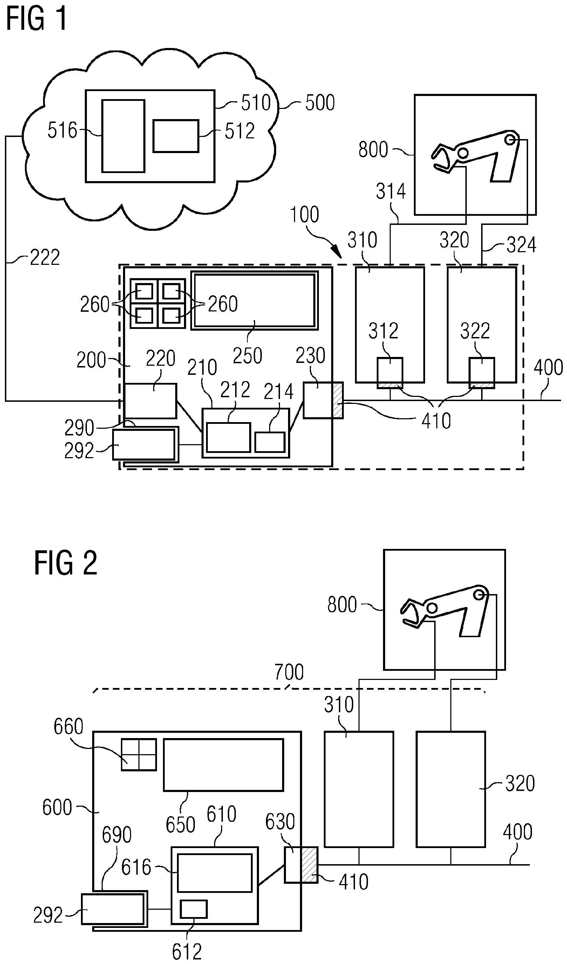

Figur 1 zeigt eine modulare, Cloud-fähige speicherprogrammierbare Steuerung 100, welche ein Cloud-Zentralmodul 200 sowie ein erstes 310 und ein zweites Ein-Ausgabe-Modul 320 (nachfolgend auch als IO-Module bezeichnet) umfasst, wobei das Cloud-Zentralmodul 200 und die IO-Module 310, 320 über einen Rückwandbus 400 verbunden sind. Weiterhin ist das Cloud-Zentralmodul 200 über eine Netzwerkverbindung 222 mit einem als Cloud 500 ausgestalteten Datennetzwerk 500 verbunden. Dabei kann die Cloud 500 beispielsweise gemäß der vorliegenden Beschreibung ausgestaltet und eingerichtet sein.

In der Cloud 500 ist eine Cloud-SPS-Instanz 510 implementiert, welche die Funktionalität eines zentralen Steuerungsmoduls für eine speicherprogrammierbare Steuerung, beispielsweise eine modulare speicherprogrammierbare Steuerung, aufweist oder umfasst. Dafür umfasst die Cloud-SPS 510 eine Ablaufumgebung 516 zum Ablauf eines Steuerungsprogramms bzw. Steuerprogramms, insbesondere zum zyklischen Ablauf des Steuerungsprogramms bzw. Steuerprogramms. Weiterhin umfasst die Cloud-SPS 510 ein Prozessabbild 512 zur Speicherung von Eingangs- und Ausgangs-Werten für das Steuerungsprogramm. Dabei ist das Steuerungsprogramm zur Steuerung eines Roboters 800 eingerichtet und ausgebildet, wobei die Steuerung des Roboters 800 durch Ablauf des Steuerungsprogramms, insbesondere zyklischen Ablauf des Steuerungsprogramms, in der Ablaufumgebung 516 der Cloud-SPS 510 erfolgt.

Nachfolgend wird die Steuerung des Roboters 800 durch den Ablauf des Steuerungsprogramms in der Ablaufumgebung 516 der Cloud-SPS 510 am Beispiel eines zyklischen Ablaufs des Steuerungsprogramms näher erläutert. Im Rahmen des Ablaufs eines Zyklus des Steuerungsprogramms in der Ablaufumgebung 516 der Cloud-SPS 510 wird auf Eingabewerte für das Steuerungsprogramm im Prozessabbild 512 der Cloud-SPS 510 zugegriffen. Vom Steuerungsprogramm erzeugte Ausgangswerte werden während des Ablaufs dieses Programmzyklus in entsprechende Speicherbereiche im Prozessabbild 512 der Cloud-SPS 510 geschrieben. Nach Beendigung des Zyklus des Steuerungsprogramms werden die vom Steuerungsprogramm erzeugten und im Prozessabbild 512 hinterlegten Ausgangswerte des Steuerungsprogramms über die Netzwerkverbindung 222 und ein im Cloud-Zentralmodul 200 vorgesehenes Netzwerk-Interface 220 an das Cloud-Zentralmodul 200 übertragen. Im Cloud-Zentralmodul 200 ist eine Ablauf-Umgebung 210 vorgesehen welche einen Modul-Prozessabbild-Speicherbereich 212 umfasst. Die von der Cloud-SPS 510 übertragenen Ausgangswerte des Steuerungsprogramms werden in diesem Modul-Prozessabbild 212 gespeichert und dann über eine Rückwand-Bus-Schnittstelle 230 des Cloud-Zentralmoduls 200 und den Rückwandbus 400 an das für die jeweiligen Ausgangswerte relevante IO-Modul 310, 320 übertragen. Von den jeweiligen IO-Modulen 310, 320 werden dann entsprechende analoge oder digitale Ausgangswerte an entsprechende Aktoren des Roboters 800 über jeweils mit dem IO-Modul 310, 320 verbundene Verbindungsleitungen 314, 324 übertragen.

Weiterhin werden vor dem Beginn des nächsten Programmzyklus des Steuerungsprogramms in der Cloud-SPS 510 entsprechende Eingangswerte der Sensoren des Roboters 800 für das Steuerungsprogramm von Prozessabbild 512 der Cloud-SPS 510 übertragen. Dafür werden die Messwerte der Sensoren des Roboters 800 in digitaler oder analoger Form über die Verbindungsleitungen 314, 324 an die jeweiligen IO-Module 310, 320 der modularen cloud-fähigen SPS 100 übertragen. Von dort werden die Daten dann über entsprechende Rückwandbusschnittstellen 312, 322 der IO-Module 310, 320 und den Rückwandbus zum Modul-Prozessabbild-Speicherbereich 212 des Cloud-Zentralmoduls 200 weitergeleitet. Diese Eingangswerte werden dann über das Netzwerk Interface 220 des Cloud-Zentralmoduls sowie die Netzwerkverbindung 222 zum Prozessabbild 512 der Cloud-SPS 510 transferiert. Von dort können die Eingangswerte dann in die Ablaufumgebung 516 der Cloud-SPS im Rahmen des Ablaufs des nächsten Zyklus des Steuerungsprogramms transferiert werden.

Zur Beeinflussung der Cloud-SPS durch einen Bediener weist das Cloud-Zentralmodul 200 vier Bedienknöpfe 260 auf. Weiterhin weist das Cloud-Zentralmodul 200 ein Display 250 auf, auf welchem zumindest unter anderem der Betriebszustand der Cloud-SPS sowie weitere Informationen über einen Zustand, eine Kennung und/oder Eigenschaften der Cloud-SPS 510 darstellt werden können. Dabei können typische Betriebszustände der Cloud-SPS 510 z.B. unter anderem ein "Run"-, "Stopp"- oder auch "Einricht"-Betriebszustand sein. Dabei ist der Run-Betriebszustand zum zyklischen Programmablauf des Steuerungsprogramms zur Steuerung des Roboters 800 vorgesehen, wobei in diesem Betriebszustand keine Änderungen am Steuerungsprogramm vorgenommen werden können. Im Stopp-Betriebszustand ist der Ablauf des Steuerungsprogramms in der Cloud-SPS 510 angehalten während im Einricht-Betriebszustand das Steuerungsprogramm zwar ablaufen, aber gleichzeitig auch geändert werden kann, wobei während eines Veränderns des Steuerungsprogramms die Cloud-SPS 510 kurzzeitig in den Stopp-Betriebszustand übergeht.

Dabei kann die Cloud-SPS 510 und das Cloud-Zentralmodul 200 derart ausgebildet und eingerichtet sein, dass der aktuelle Betriebszustand der Cloud-SPS 510 auf dem Display 250 des Cloud-Zentralmoduls 200 angezeigt wird. Weiterhin können auch noch Identifikations-Informationen, beispielsweise eine Modell-Nummer, der Cloud-SPS 510 sowie beispielsweise weitere Kenngrößen oder Eigenschaften der Cloud-SPS 510 auf dem Display 250 angezeigt werden. Auf diese Weise kann ein unmittelbar bei der SPS 100 anwesender Benutzer über das Display 250 des Cloud-Zentralmoduls 200 jederzeit Art und Zustand der den Roboter 400 steuernden Cloud-SPS 510 erkennen. Über einen oder mehrere der Bedienknöpfe 260 kann ein an der modularen cloud-fähigen SPS 100 anwesender Benutzer weiterhin den Betriebszustand der Cloud-SPS 510 verändern, in dem er beispielsweise beim Auftreten einer Störung bei der Steuerung des Roboters 800 die Cloud-SPS 510 zum Anhalten des Steuerungsprogramms in den Stopp-Zustand umschaltet. Bei im Einricht-Zustand befindlicher Cloud-SPS 510 können über die Bedienknöpfe 560 beispielsweise auch gezielt Änderungen bei Parameterwerten der Cloud-SPS 510 oder beim Steuerungsprogramm selbst vorgenommen werden.

Weiterhin umfasst die Modul-Ablauf-Umgebung 210 des Cloud-Zentralmoduls 200 einen Lizenzspeicher 214, in welchem ein für die Cloud-SPS 510 eindeutiger charakteristischer Lizenzschlüssel gespeichert ist. Dieser Lizenzschlüssel enthält für eine Erstellung der Cloud-SPS 510 innerhalb der Cloud 500 notwendigen Informationen, insbesondere alle für eine Erstellung der Cloud-SPS 510 notwendigen Informationen. Solche Informationen können beispielsweise allgemeine Leistungsparameter, eine mögliche Zahl anschließbarer Eingabe-Ausgabe-Baugruppen, eine Rechenleistung, mögliche Größen für verwendbare Steuerungsprogramme, enthaltene Features (wie beispielsweise Speicherungsmöglichkeiten für Steuerungsdaten und/oder Sensordaten für einen bestimmten vergangenen Zeitraum ("Historian")), Auswertemöglichkeiten von erfassten Werten und Daten, sowie weitere Eigenschaften, wie sie beispielsweise auch für Zentralmodule von speicherprogrammierbaren Steuerungen charakteristisch sind.

Mit Hilfe des im Lizenzspeicher 214 des Cloud-Zentralmoduls 200 gespeicherten Lizenzschlüssels ist es beispielsweise möglich, die Cloud-SPS 510 zu erzeugen oder instanziieren oder eine bereits in der Cloud 500 vorgesehene Cloud-SPS 510 dem Cloud-Zentralmodul 200 bzw. der modularen Cloud-fähigen SPS 100 zuzuordnen. Dabei kann die genannte Erzeugung, Instanziierung bzw. Zuordnung der Cloud-SPS z.B. nach einem Aufbau der modularen Cloud-fähigen SPS 100, nach deren Einschalten und/oder nach deren Verbindung mit der Cloud 500 über die Netzwerkverbindung 222 erfolgen.

Weiterhin umfasst das Cloud-Zentralmodul 200 einen Speicherkarten-Slot 290, in welchem in Figur 1 eine Speicherkarte 292 aufgenommen ist. Auf der Speicherkarte kann beispielsweise das Steuerungsprogramm für die Cloud-SPS 510 gespeichert sein oder auch eine Parametrierung der Cloud-SPS 510 sowie der modularen Cloud-fähigen SPS 100. Mit Hilfe dieser Informationen kann beispielsweise nach einem Aufbau der modularen Cloud-fähigen SPS 100 und/oder deren Verbindung mit der Cloud 500 sowie der Instanziierung der Cloud-SPS 510 mit Hilfe des im Lizenzspeicher 214 gespeicherten Lizenzschlüssels weiterhin das Steuerungsprogramm für die Cloud-SPS 510 von der Speicherkarte 292 über die Modulablaufumgebung 210, das Netzwerk-Interface 220 und die Netzwerkverbindung 222 in die Cloud-SPS 510 übertragen werden. Weiterhin kann mit Hilfe von auf der Speicherkarte 292 gespeicherten Parametrierinformationen beispielsweise die Cloud-SPS 510 entsprechend für die Steuerung des Roboters 800 über die modulare Cloud-fähige SPS 100 parametriert werden. Dies kann ebenfalls über die Übertragung entsprechender Parameterwerte von der Speicherkarte in die Cloud-SPS 510 erfolgen. Weiterhin können auf der Speicherkarte 292 auch Parametrier-Informationen zur Parametrierung einzelner oder aller Module 200, 310, 320 der Cloud-fähigen speicherprogrammierbaren Steuerung 100 gespeichert sein.

Die modulare cloud-fähige SPS 100 ist flexibel aufbaubar und umfasst als verbindendes Basiselement den Rückwandbus 400, an welchen über entsprechende Rückwandbusstecker 410 das Cloud-Zentralmodul 200 sowie die IO-Module 310, 320 lösbar mit dem Rückwandbus 400 verbunden sind. Zum Austausch eines der Module 200, 310, 320 kann dieses beispielsweise vom entsprechenden Rückwandbusstecker 410 getrennt werden und ein alternatives Modul über den Rückwandbusstecker 410 in die modulare Cloud-fähige SPS 100 integriert werden.

Mit Hilfe dieses Grundmechanismus ist es möglich, beispielsweise eine herkömmliche, nicht Cloud-fähige speicherprogrammierbare Steuerung in die in Figur 1 dargestellte Cloud-basierte SPS 100 umzuwandeln. Der Ablauf einer solchen Umwandlung ist beispielhaft in den Figuren 2 - 5 dargestellt.

Figur 2 zeigt eine herkömmliche speicherprogrammierbare Steuerung 700 zur Steuerung des Roboters 800, wobei sich die herkömmliche speicherprogrammierbare Steuerung 700 von der in Figur 1 dargestellten modularen cloud-fähigen speicherprogrammierbaren Steuerung 100 nur dadurch unterscheidet, dass sie statt dem Cloud-Zentralmodul 200 in Figur 1 ein herkömmliches Zentralmodul 600 aufweist, welches über den Rückwandbusstecker 410 mit dem Rückwandbus der herkömmlichen speicherprogrammierbaren Steuerung 700 verbunden ist.

Das herkömmliche Zentralmodul 600 ist unmittelbar zum Ablauf des Steuerungsprogramms zur Steuerung des Roboters 800 innerhalb einer Ablaufumgebung 616 ausgebildet und eingerichtet, wobei sich die Ablaufumgebung 616 für das Steuerungsprogramm innerhalb einer Modul-Ablaufumgebung 610 des herkömmlichen Zentralmoduls 600 befindet. Innerhalb der Modul-Ablaufumgebung 610 ist weiterhin ein Prozessabbild 612 vorgesehen, in welchem die Ein- und Ausgangswerte für das Steuerungsprogramm gespeichert sind. Dabei ist die Ablaufumgebung für das Steuerungsprogramm 616 sowie die Modul-Ablaufumgebung 610 zum zyklischen Ablauf des Steuerungsprogramms ausgebildet und eingerichtet wobei im Rahmen des zyklischen Ablaufs des Steuerungsprogramms die Steuerung des Roboters 800 erfolgt. Dabei werden nach Ablauf eines Programmzyklus die Ausgangswerte des Steuerungsprogramms aus dem Prozessabbild 612 über die IO-Baugruppen 310, 320 an die Aktoren des Roboters 800 ausgegeben und vor dem Beginn des nächsten Programmzyklus die Eingangswerte von den Sensoren des Roboters 800 über die IO-Baugruppen 310, 320 in das Prozessabbild 612 geladen.

Weiterhin umfasst das herkömmliche Zentralmodul 600 einen Speicherkarten-Slot 690, in welchem in Figur 2 die bereits in Figur 1 beschriebene Speicherkarte 292 aufgenommen ist. Dabei ist das herkömmliche Zentralmodul 600 derart ausgebildet und eingerichtet, dass das in der Ablaufumgebung 616 für das Steuerungsprogramm gespeicherte Steuerungsprogramm auf der Speicherkarte 292 speicherbar ist. Weiterhin ist auch die für den Betrieb der herkömmlichen speicherprogrammierbaren Steuerung 600 notwendige Parametrier-Information auf der Speicherkarte 292 speicherbar. Die weiteren in Figur 2 dargestellten Komponenten entsprechen denjenigen in Figur 1.

Das herkömmliche Zentralmodul 600 umfasst zudem Bedienelemente 660 beispielsweise zur Veränderung eines Betriebszustands des herkömmlichen Zentralmoduls 600 beziehungsweise der herkömmlichen speicherprogrammierbaren Steuerung 700 oder auch zur Eingabe weiterer Werte oder Parameter. Weiterhin umfasst das herkömmliche Zentralmodul 600 eine Anzeigeeinrichtung 650 zur Anzeige eines aktuellen Betriebszustands des herkömmlichen Zentralmoduls 600 beziehungsweise der herkömmlichen SPS 700 sowie zur Anzeige weiterer Werte bezüglich dieser SPS 700 beziehungsweise dem darin ablaufenden Steuerungsprogramm.

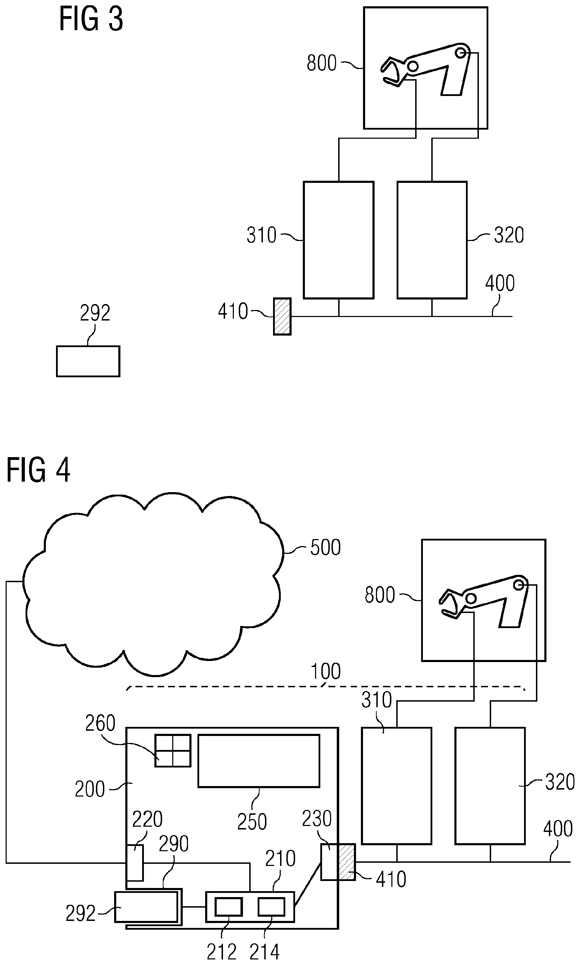

Zur Umrüstung des herkömmlichen, in Figur 2 darstellten, Automatisierungssystems zu einem cloud-basierten Steuerungssystem gemäß Figur 1, wird in einem ersten Schritt das im herkömmlichen Zentralmodul 600 gespeicherte Steuerprogramm sowie die im herkömmlichen Zentralmodul 600 gespeicherte Parametrierungs-Information auf der Speicherkarte 292 abgespeichert. Nach einem Abschalten der herkömmlichen SPS 700 wird die Speicherkarte 292 dem Speicherkarten-Slot 690 des herkömmlichen Zentralmoduls 600 entnommen und das herkömmliche Zentralmodul durch Trennen des Zentralmoduls 600 vom Rückwandbusstecker 410 vom Rückwandbus 400 getrennt und damit die herkömmliche SPS 700 aufgelöst und danach das herkömmliche Zentralmodul 600 entfernt. Dieser Zustand ist in Figur 3 darstellt.

Zum Aufbau der modularen Cloud-fähigen speicherprogrammierbaren Steuerung 100 gemäß Figur 1 wird das bereits im Zusammenhang mit Figur 1 beschriebene Cloud-Zentralmodul 200 mit dem Rückwandbus 410 verbunden und die Speicherkarte 292 in den Speicherkarten-Slot 290 des Cloud-Zentralmoduls 200 eingebracht. Auf diese Weise ist nun die modulare Cloud-fähige speicherprogrammierbare Steuerung 100 gemäß Figur 1 aufgebaut bzw. hergestellt. Weiterhin wird das Cloud-Zentralmodul 200 noch über die Netzwerkverbindung 222 mit der als Cloud 500 ausgebildeten Datennetzwerk-Struktur 500 verbunden. Der nunmehr erreichte Zustand ist in Figur 4 dargestellt.

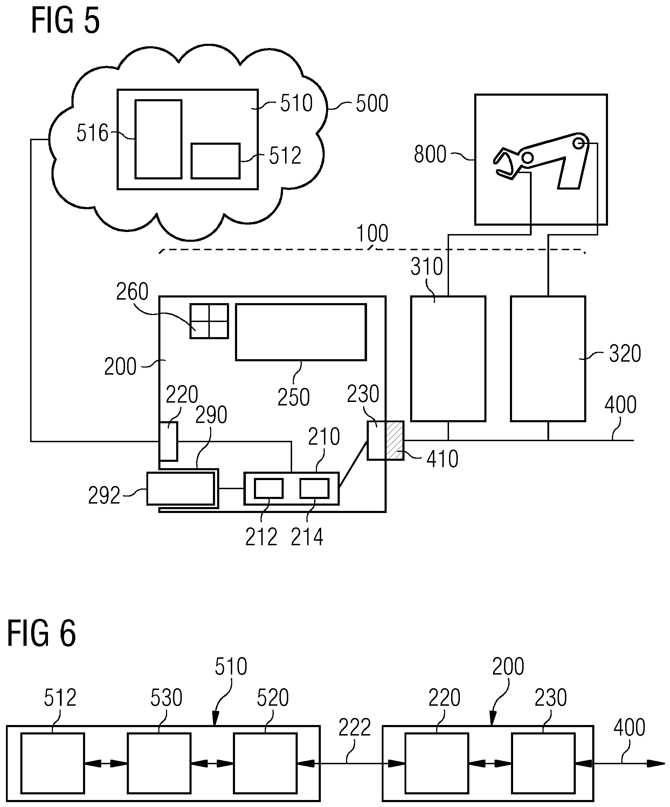

Zur Instanziierung der Cloud-SPS 510 wird nun der im Lizenzspeicher 214 des Cloud-Zentralmoduls 200 gespeicherte Lizenzschlüssel ausgelesen und mit einer entsprechenden Instanziierung-Anforderung an die Cloud 500 gesendet. Aufgrund dieser Information und der Instanziierung-Anforderung wird die durch den Lizenzschlüssel charakterisierte Cloud-SPS - Instanz 510 mit der Steuerprogamm-Ablaufumgebung 516 und dem Cloud-Prozessabbild 512 innerhalb der Cloud 500 erstellt und logisch über das Cloud-Zentralmodul 200 mit der modularen Cloud-fähigen SPS 100 verknüpft. Dieser Zustand ist in Figur 5 dargestellt.

Nachfolgend wird das Steuerungsprogramm zur Steuerung des Roboters 800 von der Speicherkarte 292 in das Cloud-Zentralmodul 200 übertragen und von dort in die Cloud-SPS 510 transferiert. Weiterhin wird die Parametrier-Information für Cloud-SPS 510 und Cloud-Zentralmodul 200 von der Speicherkarte 292 in das Cloud-Zentralmodul geladen und mit diesen Werten sowohl die Cloud-SPS 510 als auch das Cloud-Zentralmodul 200 entsprechend parametriert. Danach kann der Ablauf des Steuerungsprogramms innerhalb der Cloud-Ablaufumgebung 516 innerhalb der Cloud-SPS 510 beispielsweise von einem Nutzer über eines oder mehrere der Bedienelemente 260 des Cloud-Zentralmoduls 200 gestartet werden und so die Steuerung des Roboters 800 mit im Vergleich zu in Figur 2 dargestellten gleicher Steuerungsfunktionalität wieder aufgenommen werden.

Auf diese Weise kann durch ein Austauschen des herkömmlichen Zentralmoduls 600 gegen das Cloud-Zentralmodul 200 und einem entsprechenden Abspeichern von für die Steuerung notwendigen Daten auf der Speicherkarte 292 in vergleichsweise einfacherweise die herkömmliche, in Figur 2 dargestellte Steuerung für den Roboter 800 in die in Figur 1 bzw. Figur 5 dargestellte Cloud-basierte Steuerung für den Roboter 800 umgewandelt werden. Dadurch, dass dafür nur das herkömmliche Zentralmodul 600 gemäß Figur 2 ausgetauscht werden muss und die sonstigen Hardwarekomponenten der herkömmlichen speicherprogrammierbaren Steuerungen 700 - insbesondere die Ein-Ausgabe-Module 310, 320 - verbleiben können, muss auch eine entsprechende Verkabelung, beispielsweise zwischen dem Roboter 800 und den IO-Baugruppen 310, 320 nicht verändert werden.

Figur 6 zeigt einige wesentliche Elemente der Kommunikationshardware zur Kommunikation der Cloud-SPS 510 mit den IO-Baugruppen 310, 320 (nicht in Figur 6 dargestellt) über den Rückwandbus 400. Zur Ausgabe von innerhalb des Cloud-Prozessabbilds 512 in der Cloud-SPS 510 gespeicherten Werten an den Rückwandbus 400 werden innerhalb der Cloud-SPS 510 die Werte an einen Treiber bzw. Protokoll-Stack für Peripherie-Kommunikation 530 übertragen und dort gemäß dem Protokoll für die Peripherie-Kommunikation über den Rückwandbus verpackt. Diese Daten werden dann an einen Treiber bzw. Protokoll-Stack für die Netzwerk-Kommunikation 520 übertragen, welche diese dann wiederum gemäß des Protokolls für die Netzwerk-Kommunikation über die Netzwerkverbindung 222 entsprechend formatiert und verpackt. Nach Übertragung dieser Daten über die Netzwerkverbindung 222 werden in einem entsprechenden Treiber für die Netzwerkkommunikation 220 innerhalb des Cloud-Zentralmoduls 200 diese Datenpakete gemäß dem Netzwerk-Kommunikations-Protokoll entpackt und die dann gewonnenen Daten und Werte an einen Treiber für die Peripherie-Kommunikation 230 im Cloud-Zentralmodul 200 weiterhin gemäß dem Peripherie-Kommunikations-Protokoll entpackt und über den Rückwandbus 400 und die Eingabe-Ausgabe-Module 310, 320 an den Roboter 800 ausgegeben. Entsprechend umgekehrt erfolgt die Kommunikation von Sensorwerten der Sensoren des Roboters 800 zum Cloud-Prozessabbild-Speicherbereich 512.

Die vorliegende Erfindung beschreibt ein Cloud-fähiges Zentralmodul sowie ein Verfahren zur Umrüstung einer herkömmlichen speicherprogrammierbaren Steuerung zu einer Cloud-basierten speicherprogrammierbaren Steuerung unter Verwendung eines Cloud-fähigen Zentralmoduls. Dabei erfolgt die genannte Umrüstung im Wesentlichen durch den Austausch eines herkömmlichen Zentralmoduls innerhalb der ursprünglichen speicherprogrammierbaren Steuerung gegen das Cloud-fähige Zentralmodul und die Verbindung dieses Cloud-fähigen Zentralmoduls mit einer Cloud erfolgt. Da weitere Module der speicherprogrammierbaren Steuerung dabei teilweise oder auch in Gänze unverändert bleiben können, kann diese Umrüstung mit vergleichsweise wenig Hardware-Änderungen und sonstigem Aufwand durchgeführt werden.

## Patentansprüche

1. Cloud-Zentralmodul (200) für eine speicherprogrammierbare Steuerung (100)
- mit einer Rückwandbus-Schnittstelle (230) zur Verbindung des Cloud-Zentralmoduls (200) mit einem Rückwandbus (400) der speicherprogrammierbaren Steuerung (100) zur Kommunikation mit mindestens einem Ein-Ausgabe-Modul (310, 320) für die speicherprogrammierbare Steuerung (100),
- und mit einer Netzwerk-Schnittstelle (220) zur Verbindung mit einem Datennetzwerk (500),
- wobei im Datennetzwerk eine Cloud-SPS (510) implementiert ist, und die Cloud-SPS (510) zum Ablauf eines Steuerungsprogramms zur Steuerung einer mit dem mindestens einen Ein-Ausgabe-Modul (310, 320) verbundenen Vorrichtung oder Anlage (800) ausgebildet und eingerichtet ist, **dadurch gekennzeichnet,**
**dass** das Cloud-Zentralmodul (200)
- zum Empfang von Ausgabedaten von der Cloud-SPS (510) und der Weiterleitung der Ausgabedaten an das mindestens eine Ein-Ausgabe-Modul (310, 320) über den Rückwandbus (400) und/oder zur Weiterleitung von über den Rückwandbus (400) empfangenen Eingangsdaten vom mindestens einen Ein-Ausgabe-Modul (310, 320) an die Cloud-SPS (510),
- zur Anzeige von Identitäts- und/oder Zustandsinformationen der Cloud-SPS (510) vermittels einer Anzeigeeinrichtung (250) des Cloud-Zentralmoduls (200), und
- zur Veränderung eines Betriebszustands der Cloud-SPS (510) vermittels mindestens eines Bedienelements (260) des Cloud-Zentralmoduls (510)
ausgebildet und eingerichtet ist.

2. Cloud-Zentralmodul nach Anspruch 1,
**dadurch gekennzeichnet,**
**dass** die speicherprogrammierbare Steuerung (100) als eine modulare speicherprogrammierbare Steuerung (100) ausgebildet und eingerichtet ist und das Cloud-Zentralmodul (200) als ein auswechselbares Modul für die modulare speicherprogrammierbare Steuerung (100) ausgebildet und eingerichtet ist,
insbesondere, dass die speicherprogrammierbare Steuerung (100) als eine modulare speicherprogrammierbare Steuerung (100) ausgebildet und eingerichtet ist und das Cloud-Zentralmodul (200) derart als auswechselbares Modul ausgebildet und eingerichtet ist, dass es mit dem Rückwandbus (400) der speicherprogrammierbaren Steuerung (100) lösbar verbindbar ist.

3. Cloud-Zentralmodul nach Anspruch 1 oder 2,
**dadurch gekennzeichnet,**
**dass** das Cloud-Zentralmodul (200) weiterhin zur Ausführung eines Einrichtbetriebs und eines Normalbetriebs ausgebildet und eingerichtet ist, wobei
- im Einrichtbetrieb des Cloud-Zentralmoduls (200) vom Cloud-Zentralmodul (200) eine Kommunikationsverbindung zur Cloud-SPS (510) aufgebaut wird, und
- im Normalbetrieb das Cloud-Zentralmodul (200) zur Übertragung von Daten zwischen der Cloud-SPS (510) und dem Rückwandbus (400) der speicherprogrammierbaren Steuerung (100) ausgebildet und eingerichtet ist.

4. Cloud-Zentralmodul nach Anspruch 3,
**dadurch gekennzeichnet,**
**dass** im Normalbetrieb
- ein aktueller Betriebszustand der Cloud-SPS (510) auf der Anzeigeeinrichtung (250) des Cloud-Zentralmoduls (200) angezeigt wird
- und ein aktueller Betriebszustand der Cloud-SPS (510) vermittels des mindestens einen Bedienelements (260) des Cloud-Zentralmoduls (200) änderbar ist.

5. Cloud-Zentralmodul nach einem der Ansprüche 1 bis 4,
**dadurch gekennzeichnet,**
**dass** die Cloud-SPS (510) zur Ausführung des Steuerungsprogramms unter Verwendung eines Cloud-Prozessabbild-Speicherbereichs (512) innerhalb des Datennetzwerks (500) zur Speicherung von Ein- und Ausgabe-Daten des Steuerungsprogramms ausgebildet und eingerichtet ist, und
**dass** im Cloud-Zentralmodul (200) ein Modul-Prozessabbild-Speicherbereich (212) vorgesehen ist und weiterhin eine Synchronisierung der Daten im Cloud-Prozeassabbild-Speicherbereich (512) und im Modul-Prozessabbild-Speicherbereich (212) vorgesehen ist.

6. Cloud-Zentralmodul nach einem der Ansprüche 1 bis 5,
**dadurch gekennzeichnet,**
**dass** das Cloud-Zentralmodul (200) eine Schnittstelle (290) zur Kommunikation mit einem wechselbaren Datenträger (292) aufweist, wobei das Cloud-Zentralmodul (200) weiterhin zur Übertragung von auf dem wechselbaren Datenträger (292) gespeicherten Daten an das Datennetzwerk (500) ausgebildet und eingerichtet ist.

7. Cloud-Zentralmodul nach einem der Ansprüche 1 bis 6,
**dadurch gekennzeichnet,**
**dass** das Cloud-Zentralmodul (200) zur Übertragung von Initialisierungs-Informationen an das Datennetzwerk (500) ausgebildet und eingerichtet ist, wobei vermittels der Übertragung der Initialisierungs-Information an das Datennetzwerk (500) eine Implementierung einer Cloud-SPS (510) im Datennetzwerk (500) und/oder die Zuordnung der Cloud-SPS (510) zum Cloud-Zentralmodul (200) ausgelöst wird.

8. Cloud-Zentralmodul nach einem der Ansprüche 1 bis 7,
**dadurch gekennzeichnet,**
**dass** das Cloud-Zentralmodul (200) zur Übertragung eines Steuerungsprogramms an die Cloud-SPS (510) ausgebildet und eingerichtet ist.

9. Cloud-Zentralmodul nach einem der Ansprüche 1 bis 8,
**dadurch gekennzeichnet,**
**dass** das Cloud-Zentralmodul (200) nicht zur Ausführung eines Steuerungsprogramms zur Steuerung einer mit der speicherprogrammierbaren Steuerung verbundenen Vorrichtung oder Anlage (800) ausgebildet und eingerichtet ist.

10. Cloud-Zentralmodul (200) für eine modulare speicherprogrammierbare Steuerung (100),
wobei eine ursprüngliche modulare speicherprogrammierbare Steuerung (700) vorgesehen ist,
welche ein Zentralmodul (600) zum Ablauf eines Steuerungsprogramms zur Erzeugung einer Steuerungsfunktionalität für eine an die ursprüngliche modulare speicherprogrammierbare Steuerung angeschlossene Vorrichtung oder Anlage (800), sowie mindestens ein Ein-Ausgabe-Modul (310, 320) zur Ein- und/oder Ausgabe von Daten von der bzw. an die Vorrichtung oder Anlage (800) umfasst,
und wobei das Zentralmodul (600) und das mindestens eine Ein-Ausgabe-Modul (310, 320) über einen Rückwandbus (400) der ursprünglichen modularen speicherprogrammierbaren Steuerung (700) verbunden sind,
**dadurch gekennzeichnet,**
**dass** das Cloud-Zentralmodul (200) zur Verbindung mit einem Datennetzwerk (500) ausgebildet und eingerichtet ist, wobei im Datennetzwerk (500) eine Cloud-SPS (510) implementiert ist, welche zum Ablauf des Steuerungsprogramms ausgebildet und eingerichtet ist, und
**dass** das Cloud-Zentralmodul (200) derart ausgebildet und eingerichtet ist, dass zum Aufbau der modularen speicherprogrammierbaren Steuerung (100) ausgehend von der ursprünglichen modularen speicherprogrammierbaren Steuerung (700) das Zentralmodul (600) durch das Cloud-Zentralmodul (200) ersetzt wird,
**dass** das Cloud-Zentralmodul (200) weiterhin derart ausgebildet und eingerichtet ist, dass, wenn die modulare speicherprogrammierbare Steuerung (100) über das Cloud-Zentralmodul (200) mit dem Datennetzwerk (500) verbunden ist, beim Ablauf des Steuerungsprogramms in der Cloud-SPS (510) die Steuerungsfunktionalität für die angeschlossene Vorrichtung oder Anlage (800) erzeugt wird.

11. Cloud-Zentralmodul gemäß Anspruch 10,
**dadurch gekennzeichnet,**
**dass** das Cloud-Zentralmodul (200) nicht zum Ablauf des Steuerungsprogramms zur Steuerung der mit der modularen speicherprogrammierbaren Steuerung (100) verbundenen Vorrichtung oder Anlage (800) ausgebildet und eingerichtet ist.

12. Cloud-Zentralmodul gemäß Anspruch 10 oder 11,
**dadurch gekennzeichnet,**
**dass** das Cloud-Zentralmodul (200) derart ausgebildet und eingerichtet ist, dass zum Aufbau der modularen speicherprogrammierbaren Steuerung (100) gemäß den Ansprüchen 10 oder 11 ausgehend von der ursprünglichen modularen speicherprogrammierbaren Steuerung (700) gemäß Anspruch 10 oder 11 nur das Zentralmodul (600) durch das Cloud-Zentralmodul (200) ersetzt wird.

13. Cloud-Zentralmodul gemäß einem der Ansprüche 10 bis 12,
**dadurch gekennzeichnet,**
**dass** das Cloud-Zentralmodul (200) derart ausgebildet und eingerichtet ist, dass nach dem Aufbau der modularen speicherprogrammierbaren Steuerung (100) und der Verbindung des Cloud-Zentralmoduls (200) mit dem Datennetzwerk (500) die Steuerungsfunktionalität für die angeschlossene Vorrichtung oder Anlage (800) unter Verwendung maximal einer manuellen Benutzereingabe am Cloud-Zentralmodul (200) ausgelöst wird.

14. Cloud-Zentralmodul gemäß einem der Ansprüche 10 bis 13,
**dadurch gekennzeichnet,**
**dass** das Cloud-Zentralmodul (200), das Datennetzwerk (500), die modulare speicherprogrammierbare Steuerung (100) sowie die Cloud-SPS (510) gemäß einem der Ansprüche 2 bis 9 ausgebildet und eingerichtet sind.

15. Speicherprogrammierbare Steuerung (100),
umfassend
- ein Cloud-Zentralmodul (200) gemäß einem der vorstehenden Ansprüche zum Anschluss an ein Datennetzwerk (500) gemäß einem der vorstehenden Ansprüche,
- mindestens ein Ein-Ausgabe-Modul (310, 320) gemäß einem der vorstehenden Ansprüche zum Anschluss einer zu steuernden Vorrichtung oder Anlage (800), sowie
- einen Rückwandbus (400) gemäß einem der vorstehenden Ansprüche, wobei die speicherprogrammierbare Steuerung (100) zur Kommunikation zwischen Cloud-Zentralmodul (200) und dem mindestens einen Ein-Ausgabe-Modul (310, 320) über den Rückwandbus (400) ausgebildet und eingerichtet ist.

16. Verfahren zur Steuerung einer Vorrichtung oder Anlage (800) unter Verwendung einer Cloud-SPS (510) gemäß einem der vorstehenden Ansprüche sowie einer speicherprogrammierbaren Steuerung (100) gemäß einer der vorstehenden Ansprüche,
- wobei ein Steuerungsprogramm zur Steuerung der Vorrichtung oder Anlage (800) in der Cloud-SPS (510) zyklisch abläuft,
- wobei zwischen dem Ende eines abgelaufenen Programmzyklus des Steuerungsprogramms und dem Beginn eines nächsten Programmzyklus des Steuerungsprogramms vom Steuerungsprogramm während das abgelaufenen Programmzyklus erzeugte Ausgangsdaten von der Cloud-SPS (510) an die speicherprogrammierbare Steuerung (100) übertragen werden und von der Cloud-SPS (510) für den nächsten Programmzyklus benötigte Eingangsdaten von der speicherprogrammierbaren Steuerung (100) an die Cloud-SPS (510) übertragen werden,
und wobei weiterhin innerhalb der speicherprogrammierbaren Steuerung die Ausgangsdaten vom Cloud-Zentralmodul (200) über den Rückwandbus (400) an das mindestens eine Ein-Ausgabe-Modul (310, 320) und die Eingangsdaten vom mindestens einen Ein-Ausgabe-Modul (310, 320) über den Rückwandbus (400) zum Cloud-Zentralmodul (200) übertragen werden.

17. Verfahren gemäß Anspruch 16,
**dadurch gekennzeichnet,**
**dass** die Cloud-SPS (510) zur zyklischen Ausführung des Steuerungsprogramms unter Verwendung eines Cloud-Prozessabbild-Speicherbereichs (512) innerhalb des Datennetzwerks (500) ausgebildet und eingerichtet ist, und dass im Cloud-Zentralmodul (200) ein Modul-Prozessabbild-Speicherbereich (212) vorgesehen ist,
wobei zwischen dem Ende des abgelaufenen Programmzyklus des Steuerungsprogramms und dem Beginn des nächsten Programmzyklus des Steuerungsprogramms die Ausgangsdaten vom Cloud-Prozessabbild-Speicherbereich (512) zum Modul-Prozessabbild-Speicherbereich (212) und die Eingangsdaten vom Modul-Prozessabbild-Speicherbereich (212) zum Cloud-Prozessabbild-Speicherbereich (512) übertragen werden.

18. Verfahren zum Umrüsten der Steuerung für eine Vorrichtung oder Anlage (800) von einer Steuerung mit einer mit der Vorrichtung oder Anlage (800) verbundenen ursprünglichen speicherprogrammierbaren Steuerung (700) gemäß Anspruch 10 zu einer Cloud-basierten Steuerung unter Verwendung einer Cloud-SPS (510) gemäß einem der Ansprüche 1 bis 14 und einer speicherprogrammierbaren Steuerung (100) gemäß einem der Ansprüche 1 bis 14, umfassend die Schritte:
a.) Beenden der Steuerung der Vorrichtung oder Anlage (800) durch Stoppen der ursprünglichen speicherprogrammierbaren Steuerung (700),
b.) Umrüsten auf die speicherprogrammierbare Steuerung (100) durch Trennen des Zentralmoduls (600) vom Rückwandbus (400) und Verbinden des Cloud-Zentralmoduls (200) mit dem Rückwandbus (400),
c.) Herstellen einer Kommunikationsverbindung des Cloud-Zentralmoduls (200) zur Cloud-SPS (510),
d.) Wiederaufnahme der Steuerung der Vorrichtung oder Anlage (800) durch Starten der modularen speicherprogrammierbaren Steuerung (100) und der Cloud-SPS (510).

19. Verfahren gemäß Anspruch 18,
wobei Verfahrensschritt c.) die nachfolgenden Verfahrensschritte umfasst:
c1.) Herstellen einer Kommunikationsverbindung des Cloud-Zentralmoduls (200) zu einem Datennetzwerk (500) gemäß einem der Ansprüche 1 bis 14,
c2.) Übertragen von Instanziierungs-Informationen für die Cloud-SPS (510) vom Cloud-Zentralmodul (200) zum Datennetzwerk (500),
c3.) Erzeugen und/oder Einrichten der Cloud-SPS (510) im Datennetzwerk (500),
c4.) Aufnehmen der Kommunikation zwischen Cloud-SPS (510) und Cloud-Zentralmodul (500).

20. Verfahren gemäß Anspruch 18 oder 19,
wobei vor, während oder unmittelbar nach Verfahrensschritt
a.) der nachfolgende Verfahrensschritt ausgeführt wird:
a1.) Übertragen des Steuerungsprogramms und/oder Parametrier-Informationen der ursprünglichen speicherprogrammierbaren Steuerung und/oder Projekt-Informationen bezüglich des Steuerungsprogramms von der ursprünglichen speicherprogrammierbaren Steuerung (700) auf einen mobilen Datenträger (292),
und wobei im Rahmen des Verfahrensschritts c.) die nachfolgenden Verfahrensschritte ausgeführt werden:
c5.) Übertragen des Steuerungsprogramms und/oder der Parametrier-Informationen der ursprünglichen speicherprogrammierbaren Steuerung und/oder der Projekt-Informationen bezüglich des Steuerungsprogramms vom mobilen Datenträger (292) in das Cloud-Zentralmodul (200), und
c6.) Weiterleiten des Steuerungsprogramms und/oder der Parametrier-Informationen der ursprünglichen speicherprogrammierbaren Steuerung und/oder der Projekt-Informationen bezüglich des Steuerungsprogramms vom Cloud-Zentralmodul (200) zum Datennetzwerk (500) oder zur Cloud-SPS (510).
